# EUROPÄISCHE PATENTSCHRIFT

(11) **EP 0 645 216 B1**
(45) Veröffentlichungstag und Bekanntmachung des Hinweises auf die Patenterteilung: **17.06.1998**
(21) Anmeldenummer: 94114400.8
(22) Anmeldetag: 14.09.1994
(51) Int. Cl.: B25B 27/30

(54) **Sicherheitsfederspanner für MacPherson-Federbeine**
Spring compressor for MacPherson strut suspension
Compresseur de ressort pour ressorts de suspension MacPherson

(30) Priorität: 29.09.1993 DE 9314698 U
(43) Veröffentlichungstag der Anmeldung: 29.03.1995
(73) Patentinhaber: Klann, Horst, D-78052 Villingen-Schwenningen (DE)
(72) Erfinder: Klann, Horst, D-78052 Villingen-Schwenningen (DE)
(74) Vertreter: Neymeyer, Franz, Dipl.-Ing. (FH)

(56) Entgegenhaltungen:
- EP-A- 0 149 842
- AU-A- 566 421
- DE-A- 3 208 510
- DE-A- 4 139 936
- DE-U- 8 025 426
- FR-A- 2 667 915
- US-A- 4 558 500

## Beschreibung

Die Erfindung betrifft ein Federspanngerät zum Montieren und Demontieren einer Schraubenfeder eines Kraftfahrzeug-Federbeines bestehend aus zwei Federspannern mit jeweils einer Gewindespindel, die an einem Ende mit einem Zughaken versehen ist; mit jeweils einem einen Spannhaken und eine Führungsbuchse aufweisenden Spannelement, wobei das Spannelement mit seiner Führungsbuchse frei längs der Gewindespindel verschiebbar ist; und mit jeweils einer Spannmutter, mit welcher das Spannelement mit seiner Führungsbuchse zum Spannen der Schraubenfeder entlang der Gewindespindel auf den Zughaken zu bewegbar ist; und aus einem aus drei gegeneinander begrenzt schwenkbaren Bügelteilen bestehenden Sicherheitsbügel der die beiden Federspanner beim Spannen an der Schraubenfeder in einem bestimmten Abstand voneinander hält, wobei die Bügelebene im wesentlichen senkrecht zur Spannfederachse angeordnet ist, jedoch eine Neigung zu einer senkrecht zur Spannfederachse stehenden Ebene aufweist, die der Steigung der Federwindungen zwischen den im Eingriff mit den Spannhaken befindlichen Abschnitten derselben entspricht.

Es ist ein Federspanngerät bekannt (DE-A 41 39 936 A1), welcher zwei Gewindespindeln aufweist, durch welche jeweils ein Spannhaken entlang der jeweils zugehörigen Gewindespindel verstellbar ist. An einem Ende der Gewindespindel ist jeweils ein Zughaken vorgesehen, welcher festsitzend am Ende der Gewindespindel angeordnet ist. Die Spannhaken sind jeweils an einer Führungshülse angeschweißt, welche entlang der zugehörigen Gewindespindel verschiebbar ist. Desweiteren ist ein Sicherheitsbügel vorgesehen, welcher zwei äußere Haltebügel aufweist, die an der jeweiligen Führungsbuchse angeschweißt sind. Zwischen diesen äußeren Haltebügeln ist ein mittleres Bügelteil vorgesehen, das etwa V-förmig abgewinkelt ausgebildet ist und mit seinen beiden geradlinig verlaufenden Endbereichen jeweils eine Durchgangsöffnung der äußeren Haltebügel durchragt. Die Durchgangsöffnungen der Haltebügel werden jeweils durch an den freien Enden der Haltebügel nach außen abgewinkelt abgebogene etwa rechteckförmige Ösen gebildet. Diese Durchgangsöffnungen sind in ihren Abmessungen erheblich größer ausgebildet als das aus einem Flachstahl bestehende mittlere Bügelteil, so daß eine gewisse Schwenkbarkeit um eine nicht definierte Schwenkachse des mittleren Bügelteils gegenüber den äußeren Haltebügeln vorhanden ist. Desweiteren weist das mittlere Bügelteil eine weitere, starre Haltekralle auf, mit welcher das mittlere Bügelteil in eine der Federwindungen der zu spannenden Schraubenfeder einhängbar ist. Bei diesem bekannten Federspanngerät ist die Durchgangsöffnung in den Haltebügeln derart groß dimensioniert, daß zwar eine Längeneinstellung des gesamten Haltebügels durchführbar ist, diese eingestellte Länge aber bei einem an einer Schraubenfeder eingehängtem Federspanngerät nicht sicher erhalten bleibt. Die beiden Haltebügel sind aufgrund des großen Spiels zwischen den Durchgangsöffnungen der Haltebügel und dem mittleren Bügelteil auch während des Spannvorganges gegeneinander verschiebbar, so daß eine sichere Bedienbarkeit des Federspanngerätes nicht gewährleistet ist, da die Spannhaken sich jederzeit auf der Federwindung, in welcher sie eingehängt sind verschieben und von dieser abrutschen können, was zu einem erheblichen Unfallrisiko für das Bedienungspersonal führt. Um dennoch eine gewisse Sicherheit zu erreichen, ist die zusätzliche Haltekralle vorgesehen, die als zusätzliche Sicherung in eine Federwindung einzuhängen ist. Dies führt wiederum zu einer sehr komplizierten Handhabung des bekannten Federspanngerätes. Weiterhin weisen die Führungsbuchsen eine rechteckigen Querschnitt auf, wobei der Abstand der radial nach innen liegenden und radial nach außen liegenden Begrenzungswände der Führungsbuchse voneinander sehr groß dimensioniert ist, so daß diese Begrenzungswände auch einen äußerst großen Abstand zur jeweils zugeordneten Gewindespindel aufweisen und bei einer entsprechenden Kippbewegung beim Spannen einer Schraubenfeder durch die Krafteinwirkung der Schraubenfeder auf den an der Führungsbuchse angeordneten Spannhaken diese Führungsbuchsen zwangsläufig auf der zugehörigen Gewindespindel verkanten, wodurch erhebliche Beeinträchtigungen der Funktionssicherheit des bekannten Federspanngerätes auftreten. Dieses Verkanten kann auch zu Deformierungen des mittleren Bügelteils führen, da dieses, insbesondere bei größeren Kippwinkeln der Führungsbuchsen durch die der Kippbewegung folgenden rechteckigen Durchgangsöffnungen formschlüssig umfaßt wird.

Es ist außerdem ein Federspanngerät der eingangsgenannten, gattungsgemäßen Art bekannt (EP 0 149 842 B1), das aus zwei separaten Federspannern besteht. Jeder dieser Federspanner weist eine Gewindespindel auf, welche an ihrem einen oberen Ende mit einem an der jeweiligen Gewindespindel angeschweißten Zughaken versehen ist. Auf die Gewindespindel ist eine Führungsbuchse aufgeschoben, an welcher ein radial zur Führungsbuchse verlaufender Spannhaken angeschweißt ist. Die Führungsbuchse ist zusammen mit ihrem Spannhaken entlang der Gewindespindel frei in axialer Richtung verschiebbar und um die Achse der Gewindespindel frei drehbar. Zum Spannen einer Schraubenfeder eines Kraftfahrzeug-Federbeines ist in axialer Richtung unterhalb der Führungsbuchse eine Sechskantmutter vorgesehen, welche beim Anziehen die Führungsbuchse nach oben in Richtung auf den Zughaken bewegt, so daß sich der Abstand zwischen dem Spannhaken und dem Zughaken verkürzt und die mit ihren Federwindungen in die Spann- und Zughaken der beiden Federspanner eingehängte Schraubenfeder zusammengedrückt wird. Zum Spannen der Schraubenfeder sind die beiden Federspanner etwa diametral gegenüberliegend in die Schraubenfeder eingehängt. Beim Spannvorgang werden die beiden Federspanner abwechselnd betätigt, so daß die Schraubenfeder abwechselnd einseitig zusammengedrückt wird. Um zu verhindern, daß bei diesem einseitigen Spannvorgang die Federspanner entlang der Federwindungen verrutschen oder die Spann- bzw. Zughaken aus der Schraubenfeder aushängen, ist ein Sicherheitsbügel zwischen den beiden Federspannern vorgesehen. Der Sicherheitsbügel hält die beiden Federspanner im Bereich unterhalb ihrer Führungsbuchsen in einem vorbestimmten Abstand voneinander, so daß die Federspanner mit ihren Spann- bzw. Zughaken nicht entlang der Federwindungen gegeneinander verrutschen können.

Der Sicherheitsbügel besteht aus zwei Halbbügeln, welche jeweils mit einer separaten Distanzbuchse an jeweils einem der Federspanner axial verschiebbar gelagert sind. Die Distanzbuchsen sind jeweils zwischen der Sechskantschraube und der Führungsbuchse auf der jeweiligen Gewindespindel angeordnet, so daß beim Betätigen der Sechskantschraube des jeweiligen Federspanners die Führungsbuchse zusammen mit der Distanzbuchse entlang der jeweiligen Gewindespindel verschoben werden. Die beiden Bügelhälften sind mit ihrem jeweiligen äußeren Ende mit der zugehörigen Distanzbuchse verschweißt. Die Bügelhälften sind mit ihrem jeweiligen inneren Ende über einen U-Stahl, mit welchem sie jeweils verschraubt sind, miteinander verbunden. Die Schraubverbindungen sind jeweils so ausgeführt, daß die Bügelhälften gegenüber dem U-Stahl jeweils verschwenkbar sind, wobei die beiden Stege des U-Stahls den Schwenkbereich der Bügelhälften begrenzen.

Die beiden Bügelhälften sind jeweils so gebogen, daß sie zwischen den Buchsen und außerhalb der zu spannenden Schraubenfeder um diese herum verlaufen. Auch der zwischen den Bügelhälften angeordnete U-Stahl befindet sich stets außerhalb der Schraubenfeder.

Nachteilig an diesem Federspanngerät ist, daß die Distanzbuchsen des Sicherheitsbügels jeweils direkt auf den Gewindegängen der Gewindespindel des jeweiligen Federspanners beim Spannvorgang verschoben werden. Dies hat einen erhöhten Verschleiß der Gewindegänge zur Folge. Desweiteren können die Distanzbuchsen beim einseitigen Spannen der Federspanner auf der jeweiligen Gewindespindel leicht verkannten, wodurch ein sicheres Spannen und Entspannen erheblich erschwert wird. Durch die fest vorgegebene Länge des Sicherheitsbügels können mit einem Sicherheitsbügel auch nur Federn eines bestimmten Durchmessers gespannt werden. Bei vorgegebener Länge der Gewindespindel ist desweiteren durch die jeweils zwischen der Sechskantmutter und der Führungsbuchse des Spannhakens angeordnete Distanzbuchsen der Spannhub der beiden Federspanner erheblich eingeschränkt, so daß insbesondere Schraubenfedern größerer Länge nicht vollständig entspannbar sind.

Demgemäß liegt der Erfindung die Aufgabe zugrunde, ein Federspanngerät der gattungsgemäßen Art derart zu verbessern, daß obige Nachteile vermieden sind.

Erfindungsgemäß wird die Aufgabe im Federspanngerät der eingangsgenannten Art dadurch gelöst, daß der Sicherheitsbügel zwei äußere Haltebügel aufweist, die mit ihrem jeweiligen äußeren Ende mit der jeweiligen Führungsbuchse eines der beiden zugeordneten Spannelemente verbunden sind, und daß die Haltebügel mit ihrem jeweiligen inneren Ende entlang einer mittleren Stellschiene zur Längeneinstellung des Sicherheitsbügels verschiebbar und an dieser feststellbar sind, wobei gleichzeitig die Haltebügel jeweils in jeder an der Stellschiene fixierten Lage jeweils begrenzt schwenkbar sind, und daß die an ihrem einen Ende mit einem Sechskant versehene Spannmutter des jeweiligen Federspanners an ihrem anderen Ende eine Führungshülse aufweist, auf welcher das jeweilige Spannelement mit seiner Führungsbuchse mit geringem radialen Spiel frei drehbar gelagert ist.

Durch die erfindungsgemäße Ausgestaltung wird vorteilhaft erreicht, daß das Federspanngerät variabel zum Spannen von Schraubenfedern mit unterschiedlichen Durchmessern geeignet ist, wobei durch den variabel einstellbaren und fixierbaren Sicherheitsbügel die beiden Federspanner sicher in einem bestimmten Abstand voneinander gehalten sind und nicht entlang der Federwindungen der Schraubenfeder gegeneinander verrutschen können. Auch bleibt der ursprüngliche Spannhub der beiden Federspanner erhalten, so daß auch Schraubenfedern größerer Länge sicher auf ihre gesamte ungespannte Ursprungslänge vollständig entspannbar sind. Desweiteren sind die Spannelemente des jeweiligen Federspanners auf der Führungshülse der jeweiligen Bundmutter sicher gegen Kippen geführt, wobei sie gleichzeitig frei auf der Bundmutter drehbar sind, so daß sie beliebig in ihrer Stellung zur Aufnahme der Federwindungen der Schraubenfedern einstellbar sind. Desweiteren wird ein höherer Verschleiß der Gewindespindeln der beiden Federspanner verhindert.

Durch den erfindungsgemäß an den Bundmuttern jeweils vorgesehenen Bundsteg nach Anspruch 2 wird jeweils eine breite ringförmige Auflagefläche für die zugehörige Führungshülse des jeweiligen Spannelementes erreicht, so daß nur eine relativ geringe Flächenpressung beim Spannen einer Schraubenfeder auftritt, wodurch einerseits der Verschleiß sowohl der Bundmuttern als auch der Führungshülsen vermindert wird und andererseits geringe Betätigungskräfte beim Spannen erreicht werden.

Durch die Ausgestaltung gemäß Anspruch 3 wird ein Verlauf des Sicherheitsbügels zwischen den Spannelementen erreicht, der auch bei einseitigem Anziehen der beiden Federspanner einen genauen Sitz der Spannelemente mit ihren Spannhaken an den Federwindungen der Schraubenfeder sicherstellt. Auch die Ausgestaltung gemäß Anspruch 8 trägt vorteilhaft zu dieser Eigenschaft bei.

Die Ausgestaltung gemäß Anspruch 4 gewährleistet einen optimalen Kraftfluß zwischen dem Sicherheitsbügel und den beiden Federspannern bzw. deren jeweiligem Spannelement.

Durch die Ausgestaltungen gemäß Anspruch 5 und 6 ist das Federspanngerät in einfachster Weise zu Reparaturarbeiten demontierbar und montierbar.

Die Ausgestaltung gemäß Anspruch 7 ermöglicht eine einfache und kostengünstige Herstellung des Sicherheitsbügels.

Durch die Ausgestaltungen gemäß den Ansprüchen 9 und 10 werden Kollisionen des Sicherheitsbügels mit der zu spannenden Schraubenfeder beim Spannvorgang auch bei ungleichmäßigem Spannen der beiden Federspanner sicher vermieden.

Durch die Ausgestaltungen gemäß den Ansprüchen 11 bis 13 wird erreicht, daß der auf unterschiedliche Längen einstellbare Sicherheitsbügel zum Ausgleich der unterschiedlichen Höhenlagen bei einseitigem Anziehen der Federspanner die Stellschiene gegenüber dem Haltebügel in einem begrenzten Bereich schwenkbar ist, so daß keinerlei Verspannungen auftreten können. Desweiteren ist die Begrenzung des Schwenkbereiches durch die Begrenzungsnasen für den Monteur ein wichtiges Hilfsmittel, um erkennen zu können, wie weit er den einen oder anderen Federspanner einseitig anziehen darf, ohne daß ein Überziehen stattfindet. Dadurch wird ein Aushängen des einen oder anderen Federspanners sicher vermieden. Desweiteren haben die beiden Führungsnasen den Vorteil, daß beim Einhängen des Federspanngerätes in eine Feder oder beim Verstellen der Bügellänge der Sicherheitsbügel nicht unkontrolliert nach unten durchhängen kann, wodurch eine einfache und sichere Handhabung des Federspanngerätes sichergestellt ist.

Die Anpassung der Auflageflächen der Spann- und Zughaken an die Federwindungssteigung gemäß Anspruch 14 hat den Vorteil, daß keine Kerbwirkungen durch die jeweiligen Begrenzungskanten der Zughaken bzw. der Spannhaken auf der Federoberfläche auftreten können und somit eine Beschädigung der Schraubenfeder vermieden wird.

Durch die Ausgestaltung gemäß Anspruch 15 wird die Haftung der Zughaken und der Spannhaken auf der Federwindungsoberfläche erheblich verbessert, so daß eine optimale Betriebssicherheit beim Einsatz des erfindungsgemäßen Federspanners erreicht wird. Desweiteren haben die Kunststoffeinlagen den Vorteil, daß die Oberfläche der Federwindungen nicht beschädigt werden können.

Die Ausgestaltungen gemäß den Ansprüchen 16 bis 18 haben den Vorteil, daß das Federspanngerät mit den Spannhaken seiner Spannelemente unabhängig vom Durchmesser der zu spannenden Schraubenfeder radial zur Schraubenfeder verlaufend in die Schraubenfeder einhängbar ist und diese Lage auch beim Spannvorgang sicher beibehalten wird.

Im folgenden wird anhand der Zeichnung die Erfindung näher erläutert. Es zeigt:
- Fig. 1: ein Federspanngerät in perspektivischer Darstellung mit Schraubenfeder;
- Fig. 2: eine Stellschiene in Frontansicht und in Draufsicht;
- Fig. 3: einen Haltebügel in Draufsicht und in Seitenansicht;
- Fig. 4: einen Spannstift mit Sicherungsplint;
- Fig. 5: eine Gewindespindel mit Zughaken in Draufsicht und in Seitenansicht;
- Fig. 6: eine Spannelement mit Spannhaken in Draufsicht und in Seitenansicht;
- Fig. 7: eine Spannmutter in Teilschnitt;
- Fig. 8: eine Gewindespindel mit Zughaken, Spannelement und Spannmutter in Teilschnitt;
- Fig. 9: eine Seitenansicht eines Sicherheitsbügels;
- Fig. 10: eine weitere Ausführungsform des Federspanngerätes im Teilschnitt;
- Fig. 11: das Federspanngerät aus Fig. 10 mit einem auf einen größeren Federdurchmesser eingestellten Sicherheitsbügel im Teilschnitt;
- Fig. 12: eine dritte Ausführungsform des Federspanngerätes in perspektivischer Darstellung;
- Fig. 13: einen Teilschnitt XIIV-XIIV des Sicherheitsbügels aus Fig. 12;
- Fig. 14: einen Teilschnitt XIV-XIV des Sicherheitsbügels aus Fig. 12;
- Fig. 15: das Federspanngerät aus Fig. 12 mit einer Einstellung für Schraubenfedern mit kleinem Durchmesser im Teilschnitt;
- Fig. 16: das Federspanngerät gemäß Fig. 15 mit einer Einstellung für Schraubenfedern mit einem großen Durchmesser.

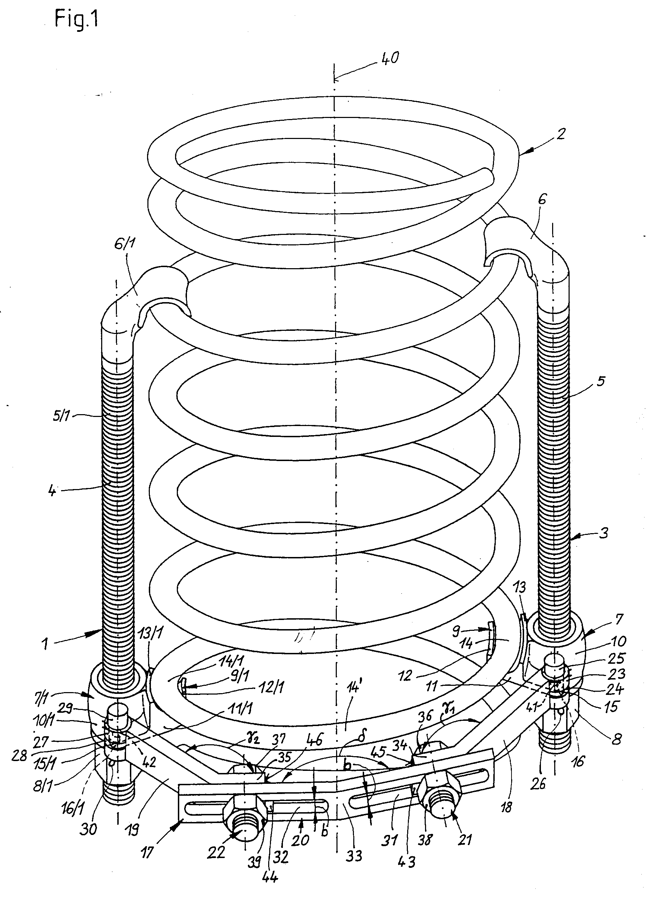

Fig. 1 zeigt ein Federspanngerät 1, welches in eine Schraubenfeder 2, wie sie üblicherweise bei Kraftfahrzeug-Federbeinen Verwendung findet, eingehängt ist. Das Federspanngerät 1 besteht aus zwei im wesentlichen baugleichen Federspannern 3 und 4. Die Federspanner 3, 4 weisen jeweils eine Gewindespindel 5 bzw. 5/1, einen Zughaken 6 bzw. 6/1, ein Spannelement 7 bzw. 7/1 und eine Spannmutter 8 bzw. 8/1 auf. Die Zughaken 6 und 6/1 sind jeweils einstückiger Bestandteil der zugehörigen Gewindespindel 5 bzw. 5/1, welche jeweils als Schmiedeteil ausgebildet ist, wobei die Zughaken 6 bzw. 6/1 das jeweilige obere Ende der Gewindespindel 5 bzw. 5/1 bilden.

Die Spannelemente 7 und 7/1 weisen jeweils einen Spannhaken 9 bzw. 9/1 auf, welcher jeweils radial außen an einer Führungsbuchse 10 bzw. 10/1 angeordnet ist. Die Spannhaken 9 und 9/1 weisen jeweils eine Aufnahmeplatte 11 bzw. 11/1, einen inneren Sicherheitssteg 12 bzw. 12/1 und einen äußeren Sicherheitssteg 13 bzw. 13/1 auf und dienen zur Aufnahme jeweils eines Federwindungsabschnittes 14 bzw. 14/1 der Schraubenfeder 2. Desweiteren sind die Spannelemente 7 und 7/1 jeweils mit einem Lagersteg 15 bzw. 15/1 versehen, welcher mit der Aufnahmeplatte 11 bzw. 11/1 jeweils in einer gemeinsamen Ebene liegt. Die Lagerstege 15 und 15/1 sind jeweils in ihrem äußeren Endbereich mit einer Lagerbohrung 16 bzw. 16/1 versehen, welche jeweils zur gelenkigen Aufnahme eines Sicherheitsbügels 17 dient.

Der Sicherheitsbügel 17 besteht aus einem rechten Haltebügel 18, einem linken Haltebügel 19 und einer Stellschiene 20, wobei die beiden Haltebügel 18, 19 mittels jeweils einer Schraubverbindung 21 bzw. 22 mit der Stellschiene 20 verbunden sind. Der Haltebügel 18 weist an seinem einen äußeren, spannelementseitigen Ende eine etwa mittig quergeteilte Lagerbuchse 23 auf, deren obere und untere Hälften einen Lagerspalt 24 bilden, der zur Aufnahme des Lagersteges 15 des Spannelementes 7 dient. Der mit seiner Lagerbuchse 23 auf dem Lagersteg 15 sitzende Haltebügel 18 ist mittels eines Steckbolzens 25 schwenkbar am Spannelement 7 gelagert, wobei der Steckbolzen 25 durch einen Splint 26 unverlierbar gesichert ist.

Der linke Haltebügel 19 ist identisch wie der rechte Haltebügel 18 ausgebildet und weist eine etwa mittig quergeteilte Lagerbuchse 27 auf, die mit ihrem Lagerspalt 28 den Lagersteg 15/1 des Spannelementes 7/1 aufnimmt. Zur schwenkbaren Lagerung des Haltebügels 19 am Spannelement 7/1 ist ein Steckbolzen 29 mit Sicherungssplint 30 vorgesehen.

Die Haltebügel 18, 19 und die Stellschiene 20 sind jeweils aus einem Flachstahl gebildet. Zur verschiebbaren Aufnahme der Haltebügel 18, 19 ist die Stellschiene 20 mit zwei Schiebeschlitzen 31, 32 versehen, welche sich annähernd über die gesamte Länge der jeweiligen Stellschienenhälfte erstrecken und in der Mitte der Stellschiene 20 durch einen Vertikalsteg 33 voneinander getrennt sind.

Die Stellschiene 20 ist mittig im Bereich ihres Zwischensteges 33 derart abgebogen ist, daß sie zwei geradlinig verlaufende Schienenhälften bildet, die einen zur Schraubenfeder 2 hin liegenden stumpfen Stellwinkel **δ** miteinander bilden. Die Haltebügel 18 und 19 weisen an ihrem jeweiligen inneren zur Stellschiene 20 hin liegenden Ende jeweils einen Verbindungsabschnitt 34 bzw. 35 auf, der jeweils zur Schraubenfeder 2 hin unter einem Bügelwinkel **γ**_{**1**} bzw. **γ**_{**2**} abgewinkelt ist. Die Bügelwinkel **γ**_{**1**}, **γ**_{**2**} und der Stellwinkel **δ** sind so aufeinander abgestimmt, daß der gesamte Sicherheitsbügel 17 unabhängig vom Durchmesser der jeweils eingespannten Schraubenfeder 2 außerhalb der Schraubenfeder 2 liegt.

Die jeweils für die Verbindung des Haltebügels 18 bzw. 19 mit der Stellschiene 20 vorgesehene Schraubverbindung 21 bzw. 22 besteht jeweils aus einer Bundschraube 36 bzw. 37 und einer Mutter 38 bzw. 39. Die Bundschraube 36 bzw. 37 durchragt jeweils eine Durchgangsbohrung (in der Zeichnung nicht dargestellt) des zugehörigen Verbindungsabschnittes 34 bzw. 35, wobei von der Außenseite her die Stellschiene 20 mit ihrem jeweiligen Schiebeschlitzen 31 bzw. 32 auf den entsprechenden Gewindeabschnitt der Bundschraube 36 bzw. 37 aufgesteckt und jeweils mit der Mutter 38 bzw. 39 gesichert ist. Die Bundschrauben 36 und 37 weisen jeweils einen Schraubenschaft auf, der jeweils etwas länger ausgeführt ist als die Dicke des zugehörigen Verbindungsabschnittes 34 bzw. 35. Dadurch wird erreicht, daß die Haltebügel 18, 19 mit ihren jeweiligen Verbindungsabschnitten 34 bzw. 35 durch Festziehen der entsprechenden Schraubverbindung 21 bzw. 22 jeweils feststehend an der Stellschiene 20 in Längsrichtung unverschieblich fixiert sind und gleichzeitig an der Stellschiene 20 schwenkbar bleiben. Da die beiden Federspanner 3 und 4 des Federspanngerätes 1 nur einzeln abwechselnd betätigbar sind, bewegt sich das entsprechende Spannelement 7 oder 7/1 entlang der Gewindespindel 5 bzw. 5/1 nach oben auf den zugehörigen Zughaken 6 bzw. 6/1 zu, während das jeweilige andere Spannelement 7/1 oder 7 in seiner jeweiligen Position unverändert bleibt. Dadurch ergibt sich eine Relativbewegung der Haltebügel 17, 18 in Schraubenfederachsrichtung zueinander. Durch die schwenkbare und doch feststehende Lagerung der Stellschiene 20 an den beiden Haltebügeln 18 und 19 wird durch eine leichte Schwenkbewegung der Stellschiene 20 gegenüber den Haltebügeln 18, 19 die axiale Relativbewegung ausgeglichen, so daß es nicht zu Verspannungen des Federspanngerätes 1 an der Schraubenfeder 2 kommen kann und die beiden Federspanner 3 und 4 trotz der Relativbewegung festsitzend an der Schraubenfeder 2 gehalten sind.

Am Verbindungsabschnitt 34 bzw. 35 des Haltebügels 18 bzw. 19 ist jeweils eine Begrenzungsnase 43 bzw. 44 angeordnet, welche am inneren Ende 45 bzw. 46 des Verbindungsabschnittes 34 bzw. 35 etwa rechtwinklig nach außen abgebogen ist und in den jeweils zugeordneten Schiebeschlitz 31 bzw. 32 der Stellschiene 20 hineinragt. Die beiden Begrenzungsnasen 42, 43 sind etwas schmaler ausgebildet als die Breite **b** des zugehörigen Schiebeschlitzes 31 bzw. 32, so daß die Begrenzungsnasen 43, 44 den Schwenkbereich der Stellschiene 20 gegenüber dem jeweiligen Haltebügel 18 bzw. 19 begrenzen. Diese Begrenzung des Schwenkwinkels hat den Vorteil, daß zum einen bei einseitigem Anziehen des einen oder anderen Federspanners 3 bzw. 4 der Monteur rechtzeitig erkennt, ab wann er nicht mehr weiter spannen darf und den jeweils anderen Federspanner 4 bzw. 3 betätigen muß, um ein einseitiges Überziehen des Federspanngerätes 1 beim abwechselnden Anziehen der Federspanner 3, 4 zu vermeiden. Dadurch sind gefährliche Unfälle durch Abrutschen entweder des Zughakens 6, 6/1 oder des Spannhakens 9, 9/1 an der eingespannten Schraubenfeder 2 sicher ausgeschlossen. Desweiteren haben die Begrenzungsnasen 43, 44 den Vorteil, daß die beiden Haltebügel 18 bzw. 19 zusammen mit der Stellschiene 20 beim Einstellen der Länge des Sicherheitsbügels 17 oder beim Einhängen des Federspanngerätes 1 in die Schraubenfeder 2 nicht unkontrolliert ausschwenken können.

Der gesamte Sicherheitsbügel 17 verläuft zwischen den beiden Federspannern 3 und 4 in einer Ebene, die einerseits rechtwinklig zur Längsmittelachse 40 der Schraubenfeder 2 verläuft und andererseits in einer Ebene, in welcher die Verbindungslinie zwischen den die Lagerpunkte 41, 42 bildenden Lagerbohrungen 16, 16/1 liegt. D.h. der Sicherheitsbügel 17 verläuft etwa parallel zur Federwindung 14', welche mit ihren Federwindungsabschnitten 14 und 14/1 in den jeweiligen Spannhaken 9 bzw. 9/1 eingehängt ist. Die Haltebügel 18, 19 und die Stellschiene 20 verlaufen dabei etwa parallel zu einer von der Schraubenfeder 2 aufgespannten Zylindermantelfläche.

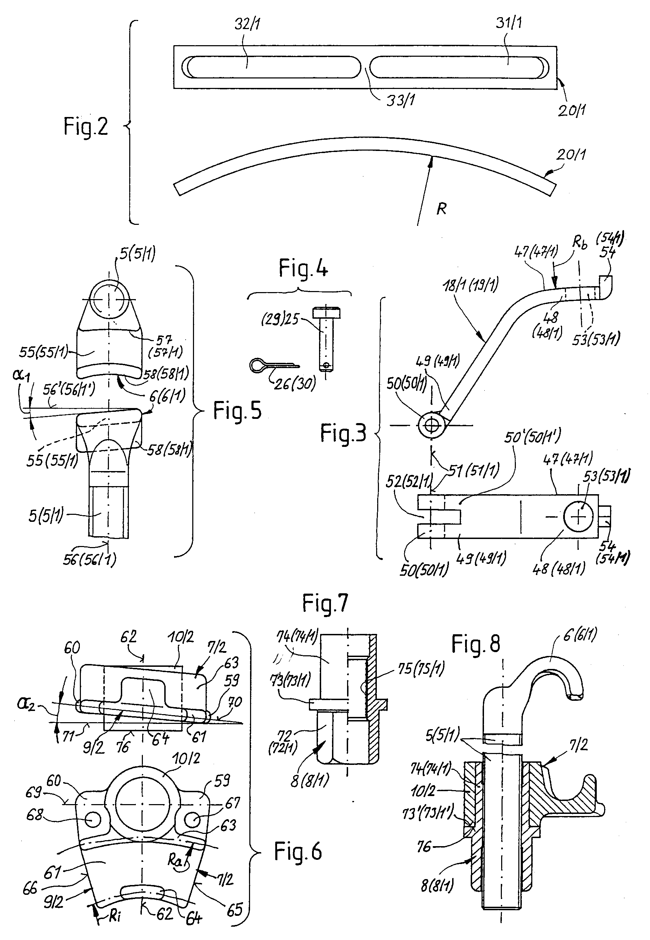

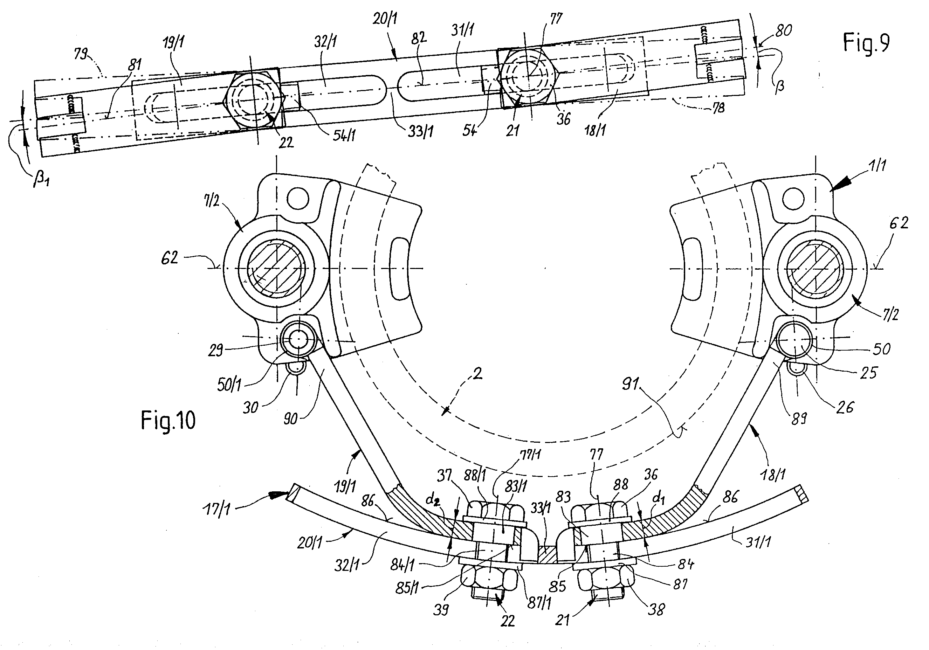

In den Fig. 2 bis 8 sind die einzelnen Bauelemente des Federspanngerätes dargestellt. Fig. 2 zeigt eine zweite Ausführungsform 20/1 der Stellschiene 20. Die Stellschiene 20/1 weist zwei Schiebeschlitze 31/1 und 32/1 auf, welche durch einen mittleren Zwischensteg 33/1 voneinander getrennt sind. Die Stellschiene 20/1 ist über ihre gesamte Länge in einem gleichmäßigen Krümmungsradius **R**, welcher etwa 170 mm bis 190 beträgt, gebogen ausgeführt. Dadurch wird erreicht, daß der gesamte Sicherheitsbügel 17/1 (siehe Fig. 10) , bestehend aus der Stellschiene 20/1 und den Haltebügeln 18/1, 19/1 unabhängig von dem Federdurchmesser der jeweils zu spannenden Schraubenfedern 2 außerhalb der Schraubenfeder 2 verläuft.

Fig. 3 zeigt einen Haltebügel 18/1 bzw. 19/1, welche beide identisch ausgebildet sind. Die folgende Beschreibung für den Haltebügel 18/1 gilt entsprechend für den Haltebügel 19/1, wobei die Bezugsziffern in Fig. 3 und in der nachfolgenden Beschreibung betreffend den Haltebügel 19/1 jeweils in Klammern aufgeführt sind. Der Haltebügel 18/1 (19/1) weist an seinem inneren Ende 47 (47/1) einen Verbindungsabschnitt 48 (48/1) auf, welcher einen gekrümmten Verlauf mit einem äußeren Krümmungsradius **R**_{**b**} aufweist, der dem Bogenradius **R** der Stellschiene 20/1 entspricht. An seinem äußeren Ende 49 (49/1) ist der Haltebügel 18/1 (19/1) mit einer Lagerbuchse 50 (50/1) versehen, welche mittig und senkrecht zu ihrer Längsmittelachse 51 (51/1) geteilt ist. Der durch die Teilung gebildete Lagerspalt 52 (52/1) setzt sich in dem sich an die Lagerbuchse 50 (50/1) anschließenden Trägerabschnitt 50' (50/1') des Haltebügels 18/1 (19/1) etwa 5 bis 15 mm fort, so daß der Haltebügel 18/1 (19/1) am zugehörigen Spannelement 7 (7/1) verschwenkbar ist, ohne mit dem Lagersteg 15 (15/1) zu kollidieren. Der Verbindungsabschnitt 48 (48/1) ist mit einer Durchgangsbohrung 53 (53/1) versehen. An seinem inneren Ende 47 (47/1) weist der Haltebügel 18/1 (19/1) eine Begrenzungsnase 54 (54/1) auf , welche etwa rechtwinklig nach außen abgebogen ist. Die Begrenzungsnase 54 (54/1) entspricht der Begrenzungsnase 43 (44) des Haltebügels 18 (19) aus Fig. 1 und dient zur Führung bzw. zur Schwenkbegrenzung der Haltebügel 18/1 (19/1) gegenüber der Stellschiene 20/1 in zusammengebautem Zustand. D.h., die Begrenzungsnase 54 (54/1) ragt im zusammengebauten Zustand in den zugeordneten Schiebeschlitz 31/1 (32/1) der Stellschiene 20/1, wie dies beispielsweise aus Fig. 10 ersichtlich ist.

Fig. 4 zeigt den Steckbolzen 25 bzw. 26 zusammen mit dem zugehörigen Sicherungssplint 26 bzw. 30.

Die Formgebung der identisch ausgebildeten Zugspindeln 5, 5/1 mit ihren Zughaken 6, 6/1 ist aus Fig. 5 ersichtlich. Die Bezugsziffern betreffend des Zughakens 6/1 sind nachfolgend jeweils in Klammern eingefügt. Der Zughaken 6 (6/1) weist eine Aufnahmeplatte 55 (55/1) auf, welche um einen Neigungswinkel **α**_{**1**} von etwa 3 bis 8° zu einer senkrecht zur Spindellängsachse 56 (56/1) verlaufenden Ebene 56' (56/1') geneigt ist. Durch den Neigungswinkel **α**_{**1**}, der vorzugsweise etwa 5° beträgt, wird der jeweiligen Federsteigung einer zu spannenden Schraubenfeder 2 Rechnung getragen, so daß Einkerbungen des Zughakens 6 (6/1) auf der Federoberfläche vermieden werden. Desweiteren ist die Aufnahmeplatte 55 (55/1) des Zughakens 6 (6/1) gewindespindelseitig jeweils mit einem Sicherheitssteg 57 (57/1) versehen, welchem an der Aufnahmeplatte 55 (55/1) gegenüberliegend ein zweiter Sicherheitssteg 58 (58/1) angeordnet ist. Die Formgebung sowohl der Aufnahmeplatte 55 (55/1) in Verbindung mit den beiden Sicherheitsstegen 57 (57/1) und 58 (58/1) ist so gewählt, daß sowohl Schraubenfedern mit kleinem als auch mit großem Durchmesser vom Zughaken sicher aufnehmbar sind. Insbesondere weist der innere Sicherheitssteg 58 (58/1) eine ausreichende Höhe auf, so daß beim Spannen einer Schraubenfeder diese mit der vom Zughaken 6 (6/1) jeweils erfaßten Federwindung nicht aus den Zughaken 6 (6/1) herausrutschen kann, wobei der Zughaken 6 bzw. 6/1 mit seinem jeweiligen inneren Sicherheitssteg 58 (58/1) gleichzeitig zwischen zwei benachbarten Federwindungen einer eingebauten, d.h. leicht vorgespannten Schraubenfeder hindurchsteckbar ist.

Fig. 6 zeigt eine weitere Ausführungsform 7/2 der Spannelemente 7 bzw. 7/1. Das Spannelement 7/2 weist einen Spannhaken 9/2, eine Führungsbuchse 10/2 und zwei Lagerstege 59 und 60 auf. Der Spannhaken 9/2 ist mit einer Aufnahmeplatte 61 versehen, welche mit ihrer vertikalen Symmetrieebene 62 radial zur Führungsbuchse 10/2 angeordnet ist. Die Aufnahmeplatte 61 ist zur Führungsbuchse 10/2 hin mit einem äußeren Sicherheitssteg 63 versehen, der sich über die gesamte Breite der Aufnahmeplatte 61 erstreckt. Dem äußeren Sicherheitssteg 63 ist gegenüberliegend ein innerer Sicherheitssteg 64 angeordnet, welcher sich symmetrisch zur Symmetrieebene 62 etwa über die halbe Breite der Aufnahmeplatte 61 erstreckt. Sowohl der Abstand des äußeren Sicherheitssteges 63 vom inneren Sicherheitssteg 64 als auch die Radien der Sicherheitsstege 63, 64 sind so gewählt, daß unterschiedliche Schraubenfedern mit verschiedenen Durchmessern zwischen den Sicherheitsstegen 63, 64 von der Aufnahmeplatte 61 sicher aufnehmbar sind. Vorzugsweise weist der äußere Sicherheitssteg einen mittleren Radius **R**_{**a**} von etwa 95 mm bis 100 mm und der innere Sicherheitssteg 64 einen mittleren Radius **R**_{**i**} von etwa 40 bis 45 mm auf. Die beiden seitlichen Begrenzungskanten 65, 66 der Aufnahmeplatte 61 verlaufen jeweils etwa radial zum Zentrum des vom äußeren Sicherheitssteg 63 definierten Kreissegmentes. Die beiden Lagerstege 59 und 60 sind jeweils seitlich an der Führungsbuchse 10/2 gewindespindelseitig hinter dem äußeren Sicherheitssteg 63 und in Draufsicht symmetrisch zur Symmetrieebene 62 der Aufnahmeplatte 61 angeordnet. Die Lagerstege 59, 60 sind jeweils mit einer Lagerbohrung 67 bzw. 68 versehen, welche jeweils zwischen der quer zur Symmetrieebene 62 verlaufenden Buchsensymmetrieebene 69 und dem äußeren Sicherheitssteg 64 angeordnet ist.

Wie die obere Seitenansicht aus Fig. 6 zeigt verläuft die Aufnahmeplatte 61 zusammen mit den beiden Lagerstegen 59, 60 in einer gemeinsamen Plattenebene 70, welche zur Horizontalebene 71, die senkrecht zur vertikalen Symmetrieebene 62 verläuft, einen Neigungswinkel **α**_{**2**} von etwa 3° bis 8° aufweist. Die Größe dieses Neigungswinkels **α**_{**2**} beträgt vorzugsweise 5°. Die Aufnahmeplatte 61 ist desweiteren im Bereich ihrer Symmetrieebene 62 zur unteren Stirnfläche 76 der Führungsbuchse 10/2 nach oben um etwa 3 mm bis 7 mm versetzt angeordnet. Durch diesen Versatz wird erreicht, daß der gesamte Sicherheitsbügel 17 bzw. 17/1 (Fig. 10) etwa zwischen den Federwindungen der Schraubenfeder 2 verläuft, ohne mit den Federwindungen zu kollidieren.

Fig. 7 zeigt eine Spannmutter 8 bzw. 8/1, wie sie bei dem Federspanngerät 1 gemäß Fig. 1 vorzugsweise Verwendung findet. Die Spannmutter 8 ist baugleich mit der Spannmutter 8/1 und weist als Antriebselement einen Sechskant 72 (72/1) auf (die Bezugsziffern betreffend der Spannmutter 8/1 sind in Klammern aufgeführt). Die Spannmutter 8 (8/1) ist als Bundmutter ausgebildet und weist oberhalb ihres Sechskantes 72 (72/1) einen umlaufenden radialen nach außen überstehenden Bundsteg 73 (73/1) auf. Oberhalb des Bundsteges 73 (73/1) ist die Spannmutter 8 (8/1) mit einer Führungshülse 74 (74/1) versehen. Das Muttergewinde 75 (75/1) der Spannmutter 8 (8/1) ist im Sechskant 72 (72/1) um etwas zwei Drittel seiner Höhe versenkt und erstreckt sich bis in die Führungshülse 74 (74/1). Das obere Ende des Muttergewindes 75 (75/1) ist in der Führungshülse (74/1) etwa um ein Viertel ihrer Gesamtlänge versenkt angeordnet.

Fig. 8 zeigt die Gewindespindel 5 (5/1) mit ihrem Zughaken 6 (6/1) in zusammengebautem Zustand mit der Spannmutter 8 (8/1) und dem Spannelement 7/2. Das Spannelement 7/2 sitzt mit seiner Führungsbuchse 10/2 annähernd spielfrei und frei drehbar auf der Führungshülse 74 (74/1) der Spannmutter 8 (8/1). In axialer Richtung nach unten stützt sich das Spannelement 7/2 mit seiner unteren Stirnfläche 76 seiner Führungsbuchse 10/2 auf dem Bundsteg 73 (73/1) der Spannmutter 8 (8/1) ab. Durch die Anordnung und die Ausgestaltung der in Fig. 8 dargestellten Bauelemente wird vorteilhaft erreicht, daß die Gewindespindel 5 (5/1) beim Anziehen bzw. beim Spannen einer Schraubenfeder nur äußerst gering belastet ist, da einerseits das Muttergewinde 75 (75/1) sich bis in die Führungshülse 74 (74/1) der Spannmutter 8 (8/1) erstreckt und andererseits das Spannelement 7/2 mit seiner Führungsbuchse 10/2 direkt auf der Führungshülse 74 (74/1) gelagert ist und somit beim Spannen ein zusätzlicher Verschleiß der Gewindespindel durch die Führungshülse 74 (74/1) sicher verhindert wird. Desweiteren weist der Bundsteg 73 (73/1) eine relativ große Auflagefläche 73' (73/1') auf, auf welcher sich die Führungsbuchse 10/2 mit ihrer die Stirnfläche 76 großflächig axial abstützt, wodurch eine sehr geringe Flächenpressung erreicht ist, was wiederum zu einem äußerst geringem Verschleiß und geringen Bedienungskräfte insbesondere beim Spannen von starken Schraubenfedern führt. Die oben gemachten Ausführen gelten selbstverständlich auch entsprechend für die Spannelemente 7 und 7/1.

Fig. 9 zeigt die Stellschiene 20/1 zusammen mit dem rechten und linken Haltebügel 18/1 bzw. 19/1 und mit den beiden Schraubverbindungen 21 und 22. Die Haltebügel 18/1 und 19/1 sind in ihrem jeweiligen Schiebeschlitz 31/1 bzw. 32/1 in einer mittleren Stellung mittels der Schraubverbindungen 21 bzw. 22 in Längsrichtung feststellbar an der Stellschiene 20/1 befestigt.

Der Haltebügel 18/1 ragt mit seiner Begrenzungsnase 54 in den zugehörigen Schiebeschlitz 31/1 und ist um die Schraubenachse 77 der Bundschraube 36 begrenzt schwenkbar. Die eine extreme Schwenklage des Haltebügel 18/1 ist in durchgezogenen Linien und die andere Schwenklage in Phantomlinien 78 dargestellt. Der Gesamtschwenkwinkel **β** von der einen Extremlage in die andere beträgt etwa 7° bis 13°. Desgleichen gilt für den Haltebügel 19/1, welcher ebenfalls in der einen Extremlage in durchgezogene Linien und in der anderen Extremlage in Phantomlinien 79 dargestellt ist. Die Begrenzungsnase 54/1 des Haltebügels 19/1 ragt in den zugehörigen Schiebeschlitz 32/1 und begrenzt den Gesamtschwenkwinkel **β**_{**1**} auf etwa 7° bis 13°. In der Mittellage befinden sich die beiden Haltebügel 18/1 und 19/1 mit ihrer jeweiligen Längsmittelachse 80 bzw. 81 in einer Flucht mit der Längsmittelachse 82 der Stellschiene 20/1.

Fig. 10 zeigt einen Teilschnitt eines Federspanngerätes 1/1, bestehend aus den Bauteilen gemäß den Figuren 2 bis 8 und den Verschraubungen 21 und 22 aus Fig. 1. Die beiden Haltebügel 18/1 und 19/1 sind an der Stellschiene 20/1 auf einen minimalen Abstand voneinander zusammengeschoben.

Der Haltebügel 18/1 ist mittels der Bundschraube 36 und der Mutter 38 der Schraubverbindung 21 unverschieblich an der Stellschiene 20/1 befestigt. Die Bundschraube 36 weist einen Schaftabschnitt 83 auf, welcher im Durchmesser größer ist als der Durchmesser ihres Gewindeabschnittes 84. Die Breite des Schiebeschlitzes 31/1 entspricht in etwa dem Gewindedurchmesser des Gewindeabschnittes 84 der Bundschraube 36. Die Schraubverbindung 22 ist gleich ausgebildet wie die Schraubverbindung 21. Sie weist eine Bundschraube 37 auf, die mit einem Schaftabschnitt 83/1 und einem Gewindeabschnitt 84/1 versehen ist, die in ihren Abmessungen denen der Schraubverbindung 21 entsprechen. Der jeweilige Schaftabschnitt 83 bzw. 83/1 ist minimal länger ausgebildet als die entsprechende Dicke **d1** bzw. **d2** des jeweiligen Haltebügels 18/1 bzw. 19/1, so daß beim Anziehen der Mutter 38 bzw. 39 der jeweilige Schaftabschnitt 83 bzw. 83/1 mit seiner umlaufenden Ringfläche 85 bzw. 85/1 gegen die innere Begrenzungsfläche 86 der Stellschiene 20/1 gedrückt wird und somit die Schraubverbindung 21 bzw. 22 fest an der Stellschiene 20/1 sitzt. Durch die gewählten Abmessungen des Schaftabschnittes 83 bzw. 83/1 bleibt bei festgezogener Schraubverbindung 21 bzw. 22 der jeweilige Haltebügel 18/1 bzw. 19/1 um die jeweilige Schraubenachse 77 bzw. 77/1 der Schraubverbindung 21 bzw. 22 schwenkbar. Zwischen der Mutter 38 bzw. 39 und der Stellschiene 20/1 sowie zwischen der Bundschraube 36 bzw. 37 und dem jeweils zugehörigen Haltebügel 18/1 bzw. 19/1 sind jeweils U-Scheiben 87, 87/1 bzw. 88, 88/1 zur Anpassung an den jeweiligen Krümmungsradius **R** der Stellschiene 20/1 bzw. **R**_{**a**} des jeweiligen Haltebügels 18/1 bzw. 19/1 vorgesehen.

Am jeweiligen äußeren Ende 89 bzw. 90 des Haltebügel 18/1 bzw. 19/1 ist jeweils ein Spannelement 7/2 angeordnet. Die beiden Spannelemente 7/2 sind mittels jeweils eines Steckbolzens 25 bzw. 29 an der jeweiligen Lagerbuchse 50 bzw. 50/1 des zugehörigen Haltebügels 18/1 bzw. 19/1 schwenkbar gelagert, wobei der Steckbolzen 25 bzw. 29 durch jeweils einen Sicherungssplint 26 bzw. 30 unverlierbar gesichert ist.

In der in Fig. 10 dargestellten Arbeitsstellung sind Schraubenfedern mit einem Außendurchmesser von etwa 100 mm spannbar. Wie aus Fig. 10 hervorgeht verläuft der gesamte Sicherheitsbügel 17/1 außerhalb der gestrichelt dargestellten Federaußenkontur 91. Durch die schwenkbare Lagerung der Spannelemente 7/2 an den zugehörigen Haltebügeln 18/1 bzw. 19/1 sind die Spannelemente 7/2 mit ihrer jeweiligen Symmetrieebene 62 so am jeweiligen Haltebügel 18/1 bzw. 19/1 verschwenkbar, daß sie eine radial nach innen gerichtete Lage gegenüber der zu spannenden Schraubenfeder 2 (gestrichelte Linie) einnehmen.

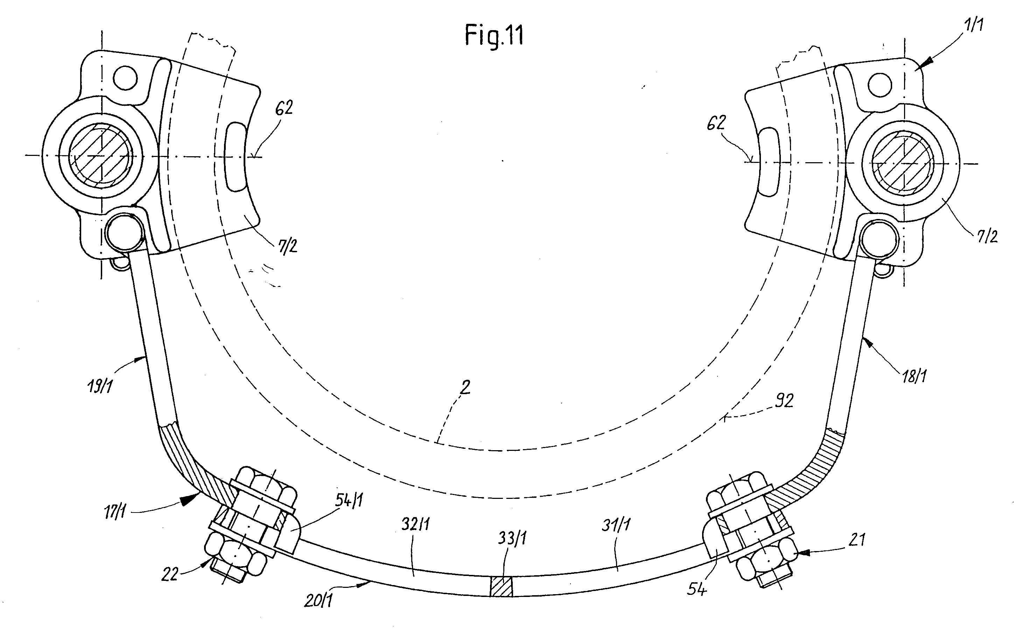

Fig. 11 zeigt das Federspanngerät 1/1 aus Fig. 10, wobei die Haltebügel 18/1 und 19/1 einen annähernd maximalen Abstand an der Stellschiene 20/1 voneinander aufweisen, d.h. der Sicherheitsbügel 17/1 ist auf annähernd seine maximale Länge eingestellt. In dieser Arbeitsstellung, in welcher die zuvor in Bezugnahme auf Fig. 10 beschriebenen Vorteile gleichfalls zutreffen, können Schraubenfedern gespannt werden, die einen Außendurchmesser von etwa 190 mm aufweisen. Durch die gekrümmte Formgebung der Stellschiene 20/1 ist auch hier gewährleistet, daß der gesamte Sicherheitsbügel 17/1 außerhalb der Federwindungen der zu spannenden Schraubenfeder 2 verläuft. Die Außenkontur einer solchen Schraubenfeder ist durch die gestrichelte Linie 92 dargestellt. Die beiden Spannelemente 7/2 sind ebenfalls so ausgerichtet, daß sie mit ihrer jeweiligen Symmetrieebene 62 radial zu der zu spannenden Schraubenfeder 2 sich etwa diametral gegenüberliegend angeordnet sind.

Fig. 12 zeigt eine weitere Ausführungsform 1/2 des Federspanngerätes 1. Das Federspanngerät 1/2 weist dieselben Federspanner 3/1 und 4/1, welche den Federspannern 3, 4 des Federspanngerätes 1 entsprechen. Desgleichen ist das Federspanngerät 1/2 an seinen Federspannern 3/1 und 4/1 ebenfalls mit Spannelementen 7/2 versehen. Wahlweise können auch die Federspannelemente 7 und 7/1 aus Fig. 1 eingesetzt werden. Das Federspanngerät 1/2 unterscheidet sich im wesentlichen durch die Ausgestaltung seines Sicherheitsbügels 17/2 von den oben beschriebenen Federspanngeräten 1 und 1/1.

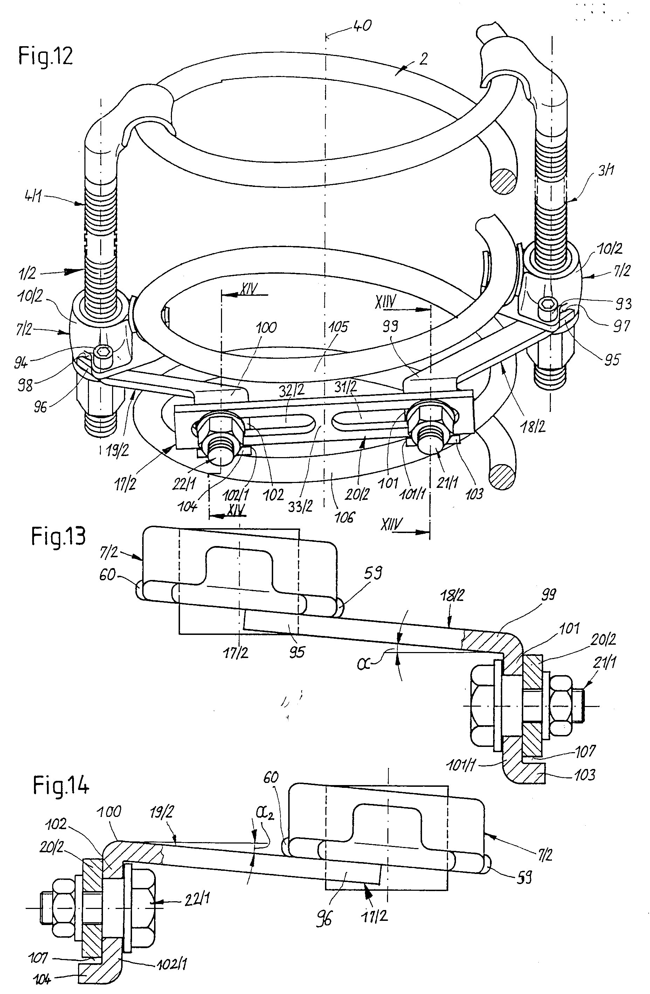

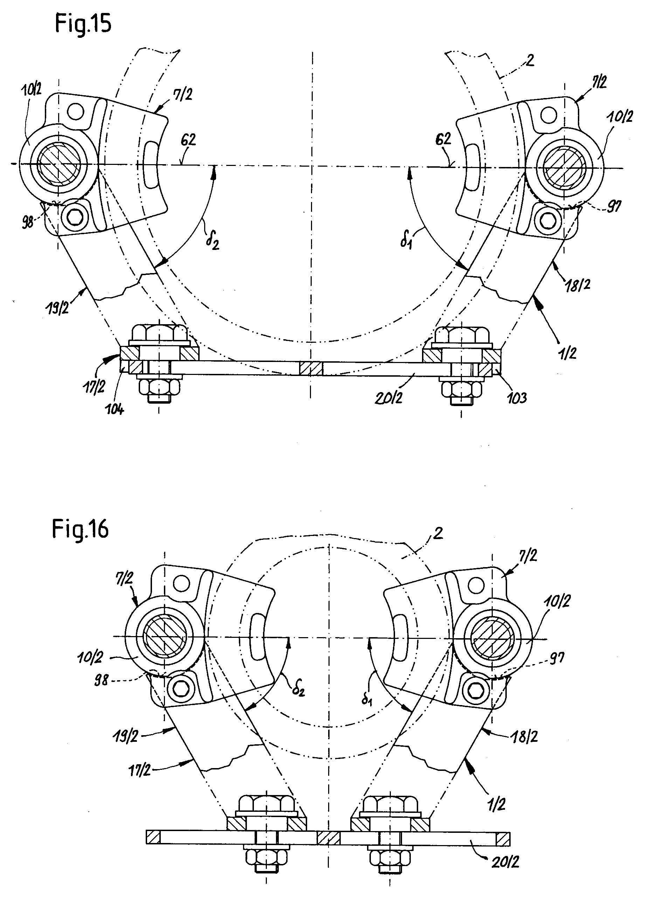

Die beiden Haltebügel 18/2 und 19/2 des Federspanngerätes 1/2 sind jeweils aus einem Flachstahl gebildet und jeweils unterhalb des zugeordneten Lagersteges 15 bzw. 15/1 an diesem jeweils mittels einer Innensechskantschraube 93 bzw. 94 befestigt. Die Haltebügel 18/2 und 19/2 weisen an ihrem jeweiligen äußeren Ende 95 bzw. 96 jeweils eine kreisbogenförmige Ausnehmung 97 bzw. 98 auf (siehe auch Fig. 15 und 16), mit welcher sie die jeweilige zugeordnete Führungsbuchse 10/2 wenigstens teilweise so umschließen, daß im montierten Zustand der jeweilige Haltebügel 18/1 bzw. 19/1 gegenüber dem jeweiligen Spannelement 7/2 nicht verschwenkbar ist. D.h. die Spannelemente 7/2 sind mit dem jeweiligen Haltebügel 18/2 bzw. 19/2 drehfest, aber lösbar verbunden. An ihrem jeweiligen inneren Ende 99 bzw. 100 sind die Haltebügel 18/2 bzw. 19/2 jeweils etwa vertikal nach unten abgebogen und bilden jeweils eine planebene Kupplungsplatte 101 bzw. 102. Die Haltebügel 18/2 und 19/2 sind mit ihren Kupplungsplatten 101, 102 über eine Stellschiene 20/2 miteinander verbunden. Die Verbindung zwischen der Stellschiene 20/2 und den Haltebügeln 18/2 bzw. 19/2 erfolgt jeweils über eine Schraubverbindung 21/1 bzw. 22/1, die im wesentlichen der Schraubverbindung 21 bzw. 22 aus Fig. 1 bzw. aus den Fig. 10 und 11 entspricht. Die Stellschiene 20/2 verläuft geradlinig planeben zwischen den Haltebügeln 18/2 und 19/2 in einer Vertikalebene, die parallel zur Schraubenfederachse 40 der zu spannenden Schraubenfeder 2 verläuft und ist mit zwei Schiebeschlitzen 31/2 und 32/2 versehen, welche in der Mitte der Stellschiene 20/2 durch einen Zwischensteg 33/2 voneinander getrennt sind. Die Stellschiene 20/2 ist gegenüber den Haltebügeln 18/2 und 19/2 schwenkbar, wobei bei angezogenen Schraubverbindungen 21/1 und 22/1 die Haltebügel 18/2 und 19/2 an der Stellschiene 22/2 unverschieblich fixiert sind. Zur Begrenzung des Schwenkwinkels weisen die Haltebügel 18/1 und 19/2 an ihrer jeweiligen Unterkante 101/1 bzw. 102/1 ihrer Kupplungsplatten 101, 102 jeweils einen unterhalb der Stellschiene 20/2 verlaufenden etwa rechtwinklig nach außen abgebogenen Anschlagssteg 103 bzw. 104 auf (siehe auch Fig. 13 u. 14).

Der Sicherheitsbügel 17/2 verläuft etwa parallel zur Steigung der Federwindung 105 der Schraubenfeder 2, wobei er zumindest teilweise zwischen der direkt über dem Sicherheitsbügel 17/2 liegenden Federwindung 105, in welche das Federspanngerät 1/2 mit seinen beiden Spannelemente 7/2 eingehängt ist, und der direkt darunter liegenden Federwindung 106 verläuft. Zum Erreichen dieses parallelen Verlaufs des Sicherheitsbügels 17/2 kann es notwendig sein, daß die beiden Haltebügel 18/2 und 19/2 im Bereich ihres jeweiligen äußeren Endes 95 bzw. 96 leicht nach oben oder nach unten abgebogen sind.

Fig. 13 und Fig. 14 zeigen jeweils einen Teilschnitt des Sicherheitsbügel 17/2 zusammen mit dem jeweils zugehörigen Spannelement 7/2.

Wie aus Fig. 13 ersichtlich ist, ist der Anschlagsteg 103 des Haltebügels 18/2 etwa rechtwinklig zur Kupplungsplatte 101 nach außen, unterhalb der Stellschiene 20/2 verlaufend abgebogen und weist zur Unterseite 107 der Stellschiene 20/2 einen Abstand in der Größenordnung von 2 - 4 mm auf. Durch diesen Anschlagsteg ist der Schwenkbereich der Stellschiene 20/2 gegenüber dem Haltebügel 18/2 entsprechend der Ausführungsform des Sicherheitsbügels 17/1 begrenzt.

Am äußeren Ende 95 des Haltebügels 18/2 ist das Spannelement 7/2 entsprechend der Fig. 15 bzw. Fig. 16 angeordnet. Der Haltebügel 18/2 ist unterhalb des Lagersteges 59 an diesem mittels einer Innensechskantschraube verschraubt und verläuft geradlinig bis zu seinem inneren Ende 99 unter einem Neigungswinkel **α**, der dem Neigungswinkel **α**_{**2**} des Lagersteges 59 bzw. 60 entspricht, von etwa 3° bis 8° schräg nach unten.

Der Haltebügel 19/2 (Fig. 14) ist mit seinem äußeren Ende 96 ebenfalls mit einem Spannelement 7/2 verbunden, wobei er am Lagersteg 60 unterhalb des Lagersteges 60 am zugehörigen Spannelement 7/2 verschraubt ist. Dementsprechend verläuft der Haltebügel 19/2 unter dem Neigungswinkel **α**_{**2**} des Lagersteges 60 bzw. 59 von ebenfalls 3° bis 8° bis zu seinem inneren Ende 100 nach oben geneigt. Die am inneren Ende 100 vertikal nach unten abgebogene Kupplungsplatte 102 weist an ihrer Unterkante 102/1 einen rechtwinklig unterhalb der Stellschiene 20/2 verlaufend abgebogenen Anschlagsteg 104 auf. Der Anschlagsteg 104 weist entsprechend dem Anschlagsteg 103 des Haltebügels 18/2 zur Unterseite 107 der Stellschiene 20/2 einen Abstand von etwa 2 mm bis 4 mm auf, so daß der Schwenkbereich der Stellschiene 20/2 gegenüber dem Haltebügel 19/2 ebenfalls begrenzt ist.

Die Fig. 15 und 16 zeigen das Federspanngerät 1/2 in zwei unterschiedlichen Längeneinstellungen des Sicherheitsbügels 17/2. Wie aus diesen beiden Darstellungen ersichtlich ist, umschließt der Haltebügel 18/2 bzw. 19/2 die jeweilige Führungsbuchse 10/2 des zugehörigen Spannelementes 7/2 mit ihrer jeweiligen Ausnehmung 97 bzw. 98 (gestrichelt dargestellt) teilweise, so daß die Spannelemente 7/2 mit dem jeweiligen Haltebügel 18/2 bzw. 19/2 drehfest verbunden sind. Die beiden Spannelemente 7/2 verlaufen dabei mit ihrer jeweiligen Symmetrieebene 62 radial zur jeweils eingespannten Schraubenfeder 2 (Phantomlinie), wobei diese Lage aufgrund der planeben parallel zur Symmetrieebene 62 verlaufenden Stellschiene 20/2, wie aus den Fig. 15 und 16 hervorgeht, für jede eingestellte Länge des Sicherheitsbügels 17/2 festliegt. Der jeweilige Planwinkel **δ**_{**1**} bzw. **δ**_{**2**} zwischen dem jeweiligen Haltebügel 18/2 bzw. 19/2 und der zugehörigen Symmetrieebene 62 des jeweiligen Spannelementes 7/2 beträgt etwa 60°.

Das oben beschriebene Federspanngerät 1/2 hat den Vorteil, daß bei einseitigem Überziehen des Federspanngerätes 1/2, d.h. wenn einer der beiden Federspanner über die Schwenkbegrenzungen der vorhandenen Anschlagstege 103 bzw. 104 hinaus angezogen wird, keine der beiden Spannelemente 7/2 mit ihren jeweiligen Spannhaken 9/2 aus der jeweiligen Federwindung herausdrehbar ist. Damit ist ein äußerst hohes Maß an Sicherheit selbst bei unsachgemäßer Bedienung des Federspanngerätes 1/2 gegeben. Desweiteren liegt der Sicherheitsbügel 17/2 bei Verwendung der Spannelemente 7/2 mit ihren jeweils geneigt verlaufenden Aufnahmeplatten 61 bzw. Lagerstegen 59, 60 unabhängig vom Durchmesser der zu spannenden Schraubenfeder 2 stets zwischen der jeweils eingespannten Federwindung 105 und der jeweils darunter liegenden Federwindung 106, ohne mit diesen zu kollidieren.

Allen Federspanngeräten 1, 1/1 und 1/ 2 ist gemeinsam, daß insbesondere bei Verwendung der identischen Spannelemente 7/2 beide Federspanner 3, 4 bzw. 3/1, 4/1 absolut baugleich sind, wodurch geringe Herstellkosten erreichbar sind.

Das Federspanngerät 1/1 weist zudem noch identisch ausgebildete Haltebügel 18/1 und 19/1 auf, wodurch ebenfalls die Herstellkosten gesenkt werden.

Die Gewindespindeln sind einstückig mit ihren Zughaken als Schmiedeteile ausgebildet. Auch sind die Spannelemente 7, 7/1, 7/2 Schmiedeteile, so daß mit den erfindungsgemäßen Federspanngeräten 1, 1/1 und 1/2 Spannkräfte bis zu 10 t erreichbar sind.

Desweiteren sind die Zughaken (6, 6/1) und/oder die Spannhaken (9, 9/1) zur Aufnahme der Federwindungen der Schraubenfeder (2) mit Kunststoffeinlagen (in der Zeichnung nicht dargestellt) versehen. Die Kunststoffeinlagen sind mittels Rastverbindungen auswechselbar mit den Zughaken 6, 6/1, 6/2 bzw. mit den Spannhaken 9, 9/1, 9/2 verbunden. Durch das Anbringen solcher Kunststoffeinlagen wird zum einen die Haftung zwischen der eingespannten Federwindung und dem entsprechen Zug- bzw. Spannhaken erhöht und zum anderen eine Beschädigung der Oberfläche der Federwindungen sicher vermieden. Somit wird durch diese Maßnahme die Sicherheit beim Einsatz des erfindungsgemäßen Federspanners 1, 1/1, 1/2 weiter optimiert.

## Patentansprüche

1. Federspanngerät (1, 1/1, 1/2) zum Montieren und Demontieren einer Schraubenfeder (2) eines Kraftfahrzeug-Federbeines bestehend aus zwei Federspannern (3, 4, 3/1, 4/1) mit jeweils einer Gewindespindel (5, 5/1), die an einem Ende mit einem Zughaken (6, 6/1) versehen ist; mit jeweils einem einen Spannhaken (9, 9/1, 9/2) und eine Führungsbuchse (10, 10/1, 10/2) aufweisenden Spannelement (7, 7/1, 7/2), wobei das Spannelement (7, 7/1, 7/2) mit seiner Führungsbuchse (10, 10/1, 10/2) frei längs der Gewindespindel (5, 5/1) verschiebbar ist; und mit jeweils einer Spannmutter (8, 8/1), mit welcher das Spannelement (7, 7/1, 7/2) mit seiner Führungsbuchse (10, 10/1, 10/2) zum Spannen der Schraubenfeder (2) entlang der Gewindespindel (5, 5/1) auf den Zughaken (6, 6/1) zu bewegbar ist; und aus einem aus drei gegeneinander begrenzt schwenkbaren Bügelteilen (18, 19, 20, 18/1, 19/1, 20/1, 18/2, 19/2, 20/2) bestehenden Sicherheitsbügel (17, 17/1, 17/2) der die beiden Federspanner (5, 5/1) beim Spannen an der Schraubenfeder (2) in einem bestimmten Abstand voneinander hält, wobei die Bügelebene im wesentlichen senkrecht zur Spannfederachse (40) angeordnet ist, jedoch eine Neigung zu einer senkrecht zur Spannfederachse (40) stehenden Ebene aufweist, die der Steigung der Federwindungen (14') zwischen den im Eingriff mit den Spannhaken (9, 9/1, 9/2) befindlichen Abschnitten derselben entspricht,
**dadurch gekennzeichnet,**
daß der Sicherheitsbügel (17, 17/1, 17/2) zwei äußere Haltebügel (18 bzw. 19, 18/1 bzw. 19/1, 18/2 bzw. 19/2) aufweist, die mit ihrem jeweiligen äußeren Ende (49 bzw. 49/1, 89 bzw. 90, 95 bzw. 96) mit der jeweiligen Führungsbuchse (10 bzw. 10/1, 10/2) eines der beiden zugeordneten Spannelemente (7 bzw. 7/1, 7/2) verbunden sind, und
daß die Haltebügel (18 bzw. 19, 18/1 bzw. 19/1, 18/2 bzw. 19/2) mit ihrem jeweiligen inneren Ende (47 bzw. 47/1, 99 bzw. 100) entlang einer mittleren Stellschiene (20, 20/1, 20/2) zur Längeneinstellung des Sicherheitsbügels (17, 17/1, 17/2) verschiebbar und an dieser feststellbar sind, wobei gleichzeitig die Haltebügel (18 bzw. 19, 18/1 bzw. 19/1, 18/2 bzw. 19/2) jeweils in jeder an der Stellschiene (20, 20/1, 20/2) fixierten Lage jeweils begrenzt schwenkbar sind, und
daß die an ihrem einen Ende mit einem Sechskant (72 bzw. 72/1) versehene Spannmutter (8 bzw. 8/1) des jeweiligen Federspanners (3, 4 bzw. 3/1, 4/1) an ihrem anderen Ende eine Führungshülse (74 bzw. 74/1) aufweist, auf welcher das jeweilige Spannelement (7, 7/1, 7/2) mit seiner Führungsbuchse (10, 10/1, 10/2) mit geringem radialen Spiel frei drehbar gelagert ist.

2. Federspanngerät nach Anspruch 1, dadurch gekennzeichnet, daß die Spannmutter (8 bzw. 8/1) zwischen ihrer Führungshülse (74 bzw. 74/1) und ihrem Sechskant (72 bzw. 72/1) einen umlaufenden, radial nach außen vorstehenden Bundsteg (73 bzw. 73/1) aufweist, auf welchem das jeweilige Spannelement (7, 7/1, 7/2) mit seiner Führungsbuchse (10, 10/1, 10/2) beim Spannen der Schraubenfeder (2) aufliegt.

3. Federspanngerät nach Anspruch 1 oder 2, dadurch gekennzeichnet, daß die Führungsbuchse (10, 10/1, 10/2) des jeweiligen Spannelementes (7, 7/1, 7/2) wenigstens einen, insbesondere zwei radial nach außen gerichtete Lagerstege (15, 15/1, 59, 60) mit jeweils einer Lagerbohrung (16, 16/1, 67, 68) aufweist, wobei die Lagerstege (15, 15/1, 59, 60) in einer gemeinsamen Plattenebene (70) liegen, die im wesentlichen senkrecht zur Längsmittelachse der Führungsbuchse (10, 10/1, 10/2) angeordnet ist, jedoch um einen Neigungswinkel **α**_{**2**} von etwa 3° bis 8° geneigt zu einer senkrecht zur Längsmittelachse der Führungsbuchse (10, 10/1, 10/2) stehenden Ebene geneigt ist.

4. Federspanngerät nach Anspruch 3, dadurch gekennzeichnet, daß die beiden Lagerstege (15, 15/1, 59, 60) und die beiden Lagerbohrungen (16, 16/1, 67, 68) der jeweiligen Führungsbuchse (10, 10/1, 10/2) symmetrisch zu einer Symmetrieebene (62) angeordnet sind, welche durch die Längsmittelachse der Führungshülse (10, 10/1, 10/2) und eine etwa mittig durch den Spannhaken (9, 9/1, 9/2) verlaufenden von der Längsmittelachse der Führungshülse (10, 10/1, 10/2) ausgehenden Radialen definiert ist und,
daß die beiden Lagerbohrungen (16, 16/1, 67, 68) zwischen einer rechtwinklig zu dieser Symmetrieebene (62) verlaufenden Buchsensymmetrieebene (69) der Führungsbuchse (10, 10/1, 10/2) und dem Spannhaken (9, 9/1, 9/2) angeordnet sind.

5. Federspanngerät nach Anspruch 3 oder 4, dadurch gekennzeichnet, daß die Haltebügel (18 bzw. 19, 18/1 bzw. 19/1, 18/2 bzw. 19/2) zur Lagerung am jeweiligen Lagersteg (15, 15/1, 59, 60) des jeweiligen Spannelementes (7, 7/1, 7/2) an ihrem jeweils zum zugeordneten Spannelement (7, 7/1, 7/2) gerichteten äußeren Ende (49 bzw. 49/1, 89 bzw. 90) mit einer quergeteilten Lagerbuchse (23 bzw. 27, 50 bzw. 50/1) versehen sind.

6. Federspanngerät nach einem der Ansprüche 3 bis 5, dadurch gekennzeichnet, daß zur Lagerung der Haltebügel (18 bzw. 19, 18/1 bzw. 19/1) am jeweiligen Lagersteg (15 bzw. 15/1, 59 bzw. 60) jeweils ein Steckbolzen (25 bzw. 29) mit Sicherungsplint (26 bzw. 30) vorgesehen ist.

7. Federspanngerät nach einem der Ansprüche 1 bis 6, dadurch gekennzeichnet, daß die Stellschiene (20, 20/1, 20/2) zwei Schiebeschlitze (31, 32, 31/1, 32/1, 31/2, 32/2) in Form von sich annähernd über die gesamte Länge der jeweiligen Hälfte der Stellschiene (20, 20/1, 20/2) erstreckende Langlöchern aufweist, die in der Mitte der Stellschiene (20, 20/1, 20/2) durch einen Zwischensteg (33, 33/1, 33/2) voneinander getrennt sind.

8. Federspanngerät nach einem der Ansprüche 1 bis 7, dadurch gekennzeichnet, daß die Stellschiene (20, 20/1) bzw. die Haltebügel (18, 19, 18/1, 19/1) aus Flachstahl gebildet sind und mit ihrer jeweiligen Längsmittelebene etwa parallel zur Längsmittelachse (40) der zu spannenden Schraubenfeder (2) verlaufen, wobei der Gesamtverlauf des Sicherheitsbügels (17, 17/1) zwischen den Führungsbuchsen (10, 10/1, 10/2) etwa der Steigung der zwischen den Spannelementen eingespannten Federwindung (14') entspricht.

9. Federspanngerät nach einem der Ansprüche 1 bis 8, dadurch gekennzeichnet, daß die Haltebügel (18 bzw. 19) jeweils an ihren inneren zur Stellschiene (20) hin liegenden Enden einen Verbindungsabschnitt (34 bzw. 35) aufweisen, der jeweils zur Schraubenfeder (2) hin jeweils unter dem gleichen Bügelwinkel **γ**_{**1**} bzw. **γ**_{**2**} abgewinkelt ist, und
daß die Stellschiene (20) mittig im Bereich ihres Zwischensteges (33) derart abgebogen ist, daß sie zwei geradlinig verlaufende Schienenhälften bildet, die einen zur Schraubenfeder (2) hin liegenden stumpfen Stellwinkel **δ** miteinander bilden, und
daß die Bügelwinkel **γ**_{**1**}, **γ**_{**2**} und der Stellwinkel **δ** so aufeinander abgestimmt sind, daß der gesamte Sicherheitsbügel (17) unabhängig vom Durchmesser der jeweils eingespannten Schraubenfeder (2) außerhalb der Schraubenfeder (2) verläuft.

10. Federspanngerät nach einem der Ansprüche 1 bis 8, dadurch gekennzeichnet, daß die Stellschiene (20/1) auf ihrer gesamten Länge einen gebogenen Verlauf aufweist, und
daß die Haltebügel (18/1 bzw. 19/1) an ihren inneren zur Stellschiene (20/1) hin liegenden Enden Verbindungsabschnitte (48 bzw. 48/1) aufweisen,
welche in ihrem jeweiligen Verlauf der Krümmung der gebogenen Stellschiene (20/1) angepaßt sind und über welchen der jeweilige Haltebügel (18/1 bzw. 19/1) mit der Stellschiene (20/1) verbunden ist, wobei die Verbindungsabschnitte (48, 48/1) jeweils so zur eingespannten Schraubenfeder (2) hin abgebogen sind, daß der gesamte Sicherheitsbügel (17/1) unabhängig vom Durchmesser der zu spannenden Schraubenfeder (2) stets außerhalb der Schraubenfeder (2) liegt.

11. Federspanngerät nach Anspruch 9 oder 10, dadurch gekennzeichnet, daß die Haltebügel (18 bzw. 19, 18/1 bzw. 19/1) an ihrer jeweiligen inneren Stirnkante (45 bzw. 46, 45/1 bzw. 46/1) ihres jeweiligen Verbindungsabschnittes (34 bzw. 35, 48 bzw. 48/1) jeweils eine etwa rechtwinklig abgebogene Begrenzungsnase (43 bzw. 44, 54 bzw. 54/1) aufweisen, welche in den jeweils zugeordneten Schiebeschlitz (31 bzw. 32, 31/1 bzw. 32/1) der Stellschiene (20, 20/1) mit Spiel hineinragt.

12. Federspanngerät nach Anspruch 11, dadurch gekennzeichnet, daß die Begrenzungsnasen (43 bzw. 44, 54 bzw. 54/1) der Haltebügel (18 bzw. 19, 18/1 bzw. 19/1) den jeweiligen Schwenkbereich der Haltebügel (18 bzw. 19, 18/1 bzw. 19/1) gegenüber der Stellschiene (20, 20/1) jeweils auf einen Gesamtschwenkwinkel **β** bzw. **β**_{**2**} von etwa 7° bis 13° begrenzen.

13. Federspanngerät nach einem der Ansprüche 1 bis 12, dadurch gekennzeichnet, daß die Haltebügel (18/1 bzw 19/1) jeweils mit einer Schraubverbindung (21 bzw. 22) an der Stellschiene (20/1) gehalten sind, wobei jeweils U-Scheiben (87 bzw. 87/1, 88 bzw. 88/1) in Form von Ausgleichsscheiben vorgesehen sind, die der jeweiligen Außenkontur der Haltebügel (18/1 bzw. 19/1) bzw. der Stellschiene (20/1) angepaßt sind.

14. Federspanngerät nach einem der Ansprüche 1 bis 13, dadurch gekennzeichnet, daß sowohl die Zughaken (6, 6/1) als auch die Spannhaken (9, 9/1, 9/2) der beide Federspanner (3, 4, 3/1, 4/1) jeweils eine Aufnahmeplatte (55 bzw. 55/1, 61) zur Aufnahme einer Federwindung der Schraubenfeder (2) aufweisen, deren jeweiliger Verlauf der Federwindungssteigung der Schraubenfeder (2) angepaßt ist und zu einer senkrecht zur jeweiligen Gewindespindelachse (56, 56/1) verlaufenden Ebene (56', 56/1', 71) bzw. zur Längsachse der Führungsbuchse (10, 10/1, 10/2) jeweils ei nen Neigungswinkel **α1** bzw. **α2** von etwa 3° bis 8°, vorzugsweise von etwa 5° aufweisen.

15. Federspanngerät nach einem der Ansprüche 1 bis 14, dadurch gekennzeichnet, daß die Zughaken (6, 6/1) und/oder die Spannhaken (9, 9/1) der beiden Federspanner (3, 4, 3/1, 4/1) jeweils mit einer Kunststoffeinlage zur Aufnahme der Schraubenfeder (2) versehen sind, welche jeweils mittels einer Rastverbindung auswechselbar am jeweiligen Zug- (6, 6/1) und/oder Spannhaken (9, 9/1, 9/2) befestigt sind.

16. Federspanngerät nach einem der Ansprüche 1 bis 4, 7 und 15 dadurch gekennzeichnet, daß die Haltebügel (18/2, 19/2) mit dem jeweils zugeordneten Spannelement (7, 7/1, 7/2) drehfest und lösbar verbunden sind.

17. Federspanngerät nach Anspruch 16, dadurch gekennzeichnet, daß die Stellschiene (20/2) mit ihrer Längsmittelebene geradlinig parallel zur Schraubenfederachse (40) und in ihrer Längsrichtung etwa parallel zur jeweils zwischen den Spannelementen (7, 7/1, 7/2) eingespannten Federwindung (105) verläuft.

18. Federspanngerät nach Anspruch 16 oder 17, dadurch gekennzeichnet, daß die Haltebügel (18/2, 19/2) jeweils so am jeweils zugeordneten Spannelement (7, 7/1, 7/2) befestigt sind, daß die Spannelemente (7, 7/1, 7/2) mit ihren Spannhaken (9, 9/1, 9/2) unabhängig vom Durchmesser der jeweils zu spannenden Schraubenfeder (2) stets radial zur Schraubenfeder verlaufend an dieser einhängbar sind und daß dieser radiale Verlauf durch den Sicherheitsbügel (17/2) beim Spannen der Schraubenfeder (2) stets erhalten bleibt.

## Claims

1. Spring tensioning device (1, 1/1, 1/2) for assembling and disassembling a helical spring (2) of a motor vehicle shock absorber comprising two spring tensioners (3, 4, 3/1, 4/1) each with a threaded spindle (5, 5/1), which is provided at one end with a draw hook (6, 6/1); with a tensioning element (7. 7/1, 7/2) comprising a tensioning hook (9, 9/1, 9/2) and a guiding sleeve (10, 10/1, 10/2), whereby the tensioning element (7, 7/1, 7/2) with its guiding sleeve (10, 10/1, 10/2) is freely displaceable along the threaded spindle (5, 5/1), and with a tensioning nut (8, 8/1) with which the tensioning element (7, 7/1, 7/2) with its guiding sleeve (10, 10/1, 10/2) is movable along the threaded spindle (5, 5/1) to the draw hook (6, 6/1) in order to tension the helical spring (2), and a safety clamp (17, 17/1, 17/2) comprising three sections (18, 19, 20, 18/1, 19/1, 20/1, 18/2, 19/2, 20/2) which are pivotable relative to one another to a limited degree, which on tensioning the helical spring (2) keeps the two spring tensioners (5, 5/1) a specific distance apart, whereby the plane of the clamp is essentially perpendicular to the tensioning spring axis (40), but is inclined relative to a plane perpendicular to the tensioning spring axis (40), which corresponds to the ascending gradient of the spring coils (14') between the sections thereof in engagement with the tensioning hooks (9, 9/1, 9/2), characterised in that the safety clamp (17, 17/1, 17/2) comprises two outer holding clamps (18 or 19, 18/1 or 19/1, 18/2 or 19/2) which with their respective outer end (49 or 49/1, 89 or 90, 95 or 96) are connected to the respective guiding sleeve (10 or 10/1, 10/2) of one of the two assigned tensioning elements (7 or 7/1, 7/2), and in that the holding clamps (18 or 19, 18/1 or 19/1, 18/2 or 19/2) with their respective inner end (47 or 47/1, 99 or 100) are displaceable along a middle sliding rail (20, 20/1, 20/2) for the adjustment in length of the safety clamp (17, 17/1, 17/2) and can be secured thereto, whereby at the same time the holding clamps (18 or 19, 18/1 or 19/1, 18/1 or 19/2) are pivotable to a limited degree in each position fixed on the sliding rail (20, 20/1, 20/2), and in that the tensioning nut (8 or 8/1) of the respective spring tensioner (3, 4 or 3/1, 4/1) provided at one end with a hexagon (72 or 72/1) has at its other end a guiding sleeve (74 or 74/1) on which the respective tensioning element (7, 7/1, 7/2) with its guiding sleeve (10, 10/1, 10/2) is freely rotatably mounted with little radial play.

2. Spring tensioning device according to Claim 1, characterised in that the tensioning nut (8 or 8/1) between its guiding sleeve (74 or 74/1) and its hexagon (72 or 72/1) has a peripheral, radially outwards projecting shoulder (73 or 73/1) on which the respective tensioning element (7, 7/1, 7/2) with its guiding sleeve (10, 10/1, 10/2) rests on tensioning the helical spring (2).

3. Spring tensioning device according to Claim 1 or 2, characterised in that the guiding sleeve (10, 10/1, 10/2) of the respective tensioning element (7, 7/1, 7/2) comprises at least one, in particular two radially outwards pointing bearing webs (15, 15/1, 59, 60) with a bearing bore (16, 16/1, 67, 68) respectively, whereby the bearing webs (15, 15/1, 59, 60) lie in a common plate plane (70), which is essentially perpendicular to the longitudinal middle axis of the guiding sleeve (10, 10/1, 10/2), but inclined by an angle of inclination α₂ of about 3° to 8° relative to a plane perpendicular to the longitudinal middle axis of the guiding sleeve (10, 10/1, 10/2).

4. Spring tensioning device according to Claim 3, characterised in that the two bearing webs (15, 15/1, 59, 60) and the two bearing bores (16, 16/1, 67, 68) of the respective guiding sleeve (10, 10/1, 10/2) are symmetrical to a plane of symmetry (62), which is defined by the longitudinal middle axis of the guiding sleeve (10, 10/1, 10/2) and a radial passing centrally through the tensioning hook (9, 9/1, 9/2) and emerging from the longitudinal middle axis of the guiding sleeve (10, 10/1, 10/2), and in that the two bearing bores (16, 16/1, 67, 68) are arranged between a plane of symmetry (69) of the guiding sleeve (10, 10/1, 10/2) at right angles to said plane of symmetry (62) and the tensioning hook (9, 9/1, 9/2).

5. Spring tensioning device according to Claim 3 or 4, characterised in that the holding clamps (18 or 19, 18/1 or 19/1, 18/2 or 19/2) for bearing on the respective bearing web (15, 15/1, 59, 60) of the respective tensioning element (7, 7/1, 7/2) are provided on their outer end (49 or 49/1, 89 or 90) directed to the assigned tensioning element (7, 7/1, 7/2) with a cross cut bearing bush (23 or 27, 50 or 50/1).

6. Spring tensioning device according to one of Claims 3 to 5, characterised in that for mounting the holding clamps (18 or 19, 18/1 or 19/1) on the respective bearing web (15 or 15/1, 59 or 60) a lock pin (25 or 29) with a cotter lock (26 or 30) is provided.

7. Spring tensioning device according to one of Claims 1 to 6, characterised in that the sliding rail (20, 20/1, 20/2) has two sliding slots (31, 32, 31/1, 32/1. 31/2, 32/2) in the form of longitudinal holes extending almost over the entire length of the respective half of the sliding rail (20, 20/1, 20/2), which are separated from one another in the middle of the sliding rail (20, 20/1, 20/2) by an intermediate web (33, 33/1, 33/2).

8. Spring tensioning device according to one of Claims 1 to 7, characterised in that the sliding rail (20, 20/1, 20/2) and the holding clamps (18, 19, 18/1, 19/1) are made of flat steel, and with their respective longitudinal middle plane are roughly parallel to the longitudinal middle axis (40) of the helical spring (2) to be tensioned, whereby the position of the safety clamp (17, 17/1) between the guiding sleeves (10, 10/1, 10/2) corresponds approximately to the inclination of the spring coil (14') tensioned between the tensioning elements.

9. Spring tensioning device according to one of Claims 1 to 8, characterised in that the holding clamps (18 and 19) at their inside ends lying towards to the sliding rail (20) have a connecting section (34 or 35) which is angled relative to the helical spring (2) having the same clamp angle γ₁ and γ₂, and in that the sliding rail (20) is angled in the middle in the region of its intermediate web (33) so that it forms two straight rail halves which together form an obtuse angle δ around the helical spring (2), and in that the clamp angles γ₁, γ₂ and the angle δ are co-ordinated so that the entire safety clamp (17) is outside the helical spring (2) regardless of the diameter of the respectively tensioned helical spring (2)

10. Spring tensioning device according to one of Claims 1 to 8, characterised in that the sliding rail (20/1) is curved over its entire length, and in that the holding clamps (18/1 or 19/1) at their inside ends lying towards the sliding rail (20/1) have connecting sections (48 or 48/1) which correspond in their respective path to the curve of the curved sliding rail (20/1), and by means of which the respective holding clamp (18/1 or 19/1) is connected to the sliding rail (20/1), whereby the connecting sections (48, 48/1) are bent relative to the tensioned helical spring (2) so that the entire safety clamp (17/1) regardless of the diameter of the helical spring (2) to be tensioned is always outside of the helical spring (2).

11. Spring tensioning device according to Claim 9 or 10, characterised in that the holding clamps (18 or 19, 18/1 or 19/1) on their respective inner edge (45 or 46, 45/1 or 46/1) of their respective connecting section (34 or 35, 48 or 48/1) have respectively an approximately right-angled delimitation nose (43 or 44, 54 or 54/1) which projects with play into the respectively assigned sliding slot (31 or 32, 31/1 or 32/1) of the sliding rail (20, 20/1).

12. Spring tensioning device according to Claim 11, characterised in that the delimitation noses (43 or 44, 54 or 54/1) of the holding clamps (18 or 19, 18/1 or 19/1) restrict the respective pivotal range of the holding clamps (18 or 19, 18/1 or 19/1) relative to the sliding rail (20, 20/1) to a total pivotal angle β or β₂ of about 7° to 13°.

13. Spring tensioning device according to one of Claims 1 to 12, characterised in that the holding clamps (18/1 or 19/1) are held respectively on the sliding rail (20/1) by a screw connection (21 or 22), whereby U-discs (87 or 87/1, 88 or 88/1) are provided in the form of correcting discs, which correspond to the respective outer contour of the holding clamps (18/1 or 19/1) of the sliding rail (20/1).

14. Spring tensioning device according to one of Claims 1 to 13, characterised in that both the draw hooks (6, 6/1) and the tensioning hooks (9, 9/1, 9/2) of the two spring tensioners (3, 4, 3/1, 4/1) respectively have a mounting plate (55 or 55/1, 61) for mounting a coil of the helical spring (2), the inclination of which corresponds to the inclination of the coil of the helical spring (2), and relative to a plane (56', 56/1', 71) perpendicular to the respective threaded spindle axis (56, 56/1) or the longitudinal axis of the guiding sleeve (10, 10/1, 10/2) respectively are inclined by an angle α₁ or α₂ of about 3° to 8°, preferably about 5°.

15. Spring tensioning device according to one of Claims 1 to 14, characterised in that the draw hooks (6, 6/1) and/or the tensioning hooks (9, 9/1) of the two spring tensioners (3, 4, 3/1, 4/1) are provided respectively with a plastic insert for mounting the helical spring (2), which are secured respectively to the respective draw (6, 6/1) and/or tensioning hook (9, 9/1, 9/2) by a detent mechanism and are replaceable.

16. Spring tensioning device according to one of Claims 1 to 4, 7 and 15, characterised in that the holding clamps (18/2, 19/2) are connected rotation-fast and detachably to the respectively assigned tensioning element (7, 7/1, 7/2).

17. Spring tensioning device according to Claim 16, characterised in that the slide rail (20/2) with its longitudinal middle plane runs in a straight line parallel to the helical spring axis (40) and in its longitudinal direction roughly parallel to the respective spring coil (105) clamped between the tensioning elements (7, 7/1, 7/2).

18. Spring tensioning device according to Claim 16 or 17, characterised in that the holding clamps (18/2, 19/2) are secured to the respectively assigned tensioning element (7, 7/1, 7/2) so that the tensioning elements (7, 7/1, 7/2) with their tensioning hooks (9, 9/1, 9/2) can always be fitted radially to the helical spring regardless of the diameter of the helical spring (2) to be tensioned, and in that this radial direction is constantly maintained by the safety clamp (17/2) on tensioning the helical spring (2).

## Revendications

1. Appareil de compression de ressort (1, 1/1, 1/2) pour le montage et le démontage d'un ressort hélicoïdal (2) d'une jambe élastique de suspension de véhicule automobile, constitué de deux compresseurs de ressort (3, 4, 3/1, 4/1) comprenant chacun une tige filetée (5, 5/1) pourvue à une extrémité d'un crochet de traction (6, 6/1), un élément de compression (7, 7/1, 7/2) présentant un crochet de compression (9, 9/1, 9/2) et une douille de guidage (10, 10/1, 10/2), l'élément de compression (7, 7/1, 7/2) étant mobile librement avec sa douille de guidage (10, 10/1, 10/2) le long de la tige filetée (5, 5/1), et un écrou de compression (8, 8/1) qui permet de déplacer l'élément de compression (7, 7/1, 7/2) avec sa douille de guidage (10, 10/1, 10/2) le long de la tige filetée (5, 5/1) vers le crochet de traction (6, 6/1) pour comprimer le ressort hélicoïdal (2), et d'un étrier de sécurité (17, 17/1, 17/2) constitué de trois parties (18, 19, 20, 18/1, 19/1, 20/1, 18/2, 19/2, 20/2) pouvant tourner de façon limitée les unes par rapport aux autres qui, lors de la compression, maintient les deux compresseurs de ressort (5, 5/1) à une distance déterminée l'un de l'autre sur le ressort hélicoïdal (2), le plan de cet étrier étant placé sensiblement perpendiculairement à l'axe (40) du ressort à comprimer, mais présentant une inclinaison par rapport à un plan perpendiculaire à cet axe (40) qui correspond à la pente des spires (14') du ressort entre les parties de celles-ci en prise avec les crochets de compression (9, 9/1, 9/2),
caractérisé par le fait
que l'étrier de sécurité (17, 17/1, 17/2) présente deux étriers extérieurs de maintien (18 et 19, 18/1 et 19/1, 18/2 et 19/2) qui sont joints à leur extrémité extérieure (49 ou 49/1, 89 ou 90, 95 ou 96) à la douille de guidage (10 ou 10/1, 10/2) d'un des deux éléments de compression associés (7 ou 7/1, 7/2),
que les étriers de maintien (18 et 19, 18/1 et 19/1, 18/2 et 19/2) peuvent, à leur extrémité intérieure (47 ou 47/1, 99 ou 100), être déplacés le long d'une barre centrale de réglage (20, 20/1, 20/2) pour le réglage de la longueur de l'étrier de sécurité (17, 17/1, 17/2) et immobilisés sur celle-ci, et en même temps, les étriers de maintien (18 et 19, 18/1 et 19/1, 18/2 et 19/2) peuvent tourner de façon limitée dans toute position fixée sur la barre de réglage (20, 20/1, 20/2), et
que l'écrou de compression (8 ou 8/1), pourvu à une extrémité d'un hexagone (72 ou 72/1), du compresseur de ressort (3 ou 4, 3/1 ou 4/1) présente à son autre extrémité une douille de guidage (74 ou 74/1) sur laquelle l'élément de compression (7, 7/1, 7/2) est monté avec liberté de rotation avec un faible jeu radial par sa douille de guidage (10, 10/1, 10/2).

2. Appareil de compression de ressort selon la revendication 1, caractérisé par le fait que l'écrou de compression (8 ou 8/1) présente entre sa douille de guidage (74 ou 74/1) et son hexagone (72 ou 72/1) un collet périphérique saillant radialement vers l'extérieur (73 ou 73/1) sur lequel l'élément de compression (7, 7/1, 7/2) s'appuie par sa douille de guidage (10, 10/1, 10/2) lors de la compression du ressort hélicoïdal (2).

3. Appareil de compression de ressort selon l'une des revendications 1 et 2, caractérisé par le fait que la douille de guidage (10, 10/1, 10/2) de l'élément de compression (7, 7/1, 7/2) présente au moins une, en particulier deux, oreilles de montage (15, 15/1, 59, 60) dirigées radialement vers l'extérieur et ayant chacune un trou de montage (16, 16/1, 67, 68), ces oreilles de montage (15, 15/1, 59, 60) étant placées dans un plan de plaque commun (70) qui est sensiblement perpendiculaire à l'axe longitudinal de la douille de guidage (10, 10/1, 10/2), mais incliné d'un angle 2 d'environ 3° à 8° par rapport à un plan perpendiculaire à cet axe.

4. Appareil de compression de ressort selon la revendication 3, caractérisé par le fait que les deux oreilles de montage (15, 15/1, 59, 60) et les deux trous de montage (16, 16/1, 67, 68) de la douille de guidage (10, 10/1, 10/2) sont placés symétriquement par rapport à un plan de symétrie (62) qui est défini par l'axe longitudinal de la douille de guidage (10, 10/1, 10/2) et par un rayon partant de cet axe et traversant à peu près au milieu le crochet de compression (9, 9/1, 9/2), et que les deux trous de montage (16, 16/1, 67, 68) sont placés entre un plan de symétrie (69) de la douille de guidage (10, 10/1, 10/2) perpendiculaire à ce plan de symétrie (62) et le crochet de compression (9, 9/1, 9/2).

5. Appareil de compression de ressort selon l'une des revendications 3 et 4, caractérisé par le fait que les étriers de maintien (18 et 19, 18/1 et 19/1, 18/2 et 19/2) sont, pour leur montage sur l'oreille de montage (15, 15/1, 59, 60) de l'élément de compression (7, 7/1, 7/2), pourvus d'un coussinet divisé transversalement (23 ou 27, 50 ou 50/1) à leur extrémité extérieure (49 ou 49/1, 89 ou 90) dirigée vers l'élément de compression associé (7, 7/1, 7/2).

6. Appareil de compression de ressort selon l'une des revendications 3 à 5, caractérisé par le fait que pour le montage de chaque étrier de maintien (18 ou 19, 18/1 ou 19/1) sur l'oreille de montage correspondante (15 ou 15/1, 59 ou 60) est prévue une fiche (25 ou 29) pourvue d'une goupille fendue d'arrêt (26 ou 30).

7. Appareil de compression de ressort selon l'une des revendications 1 à 6, caractérisé par le fait que la barre de réglage (20, 20/1, 20/2) présente deux fentes de coulissement (31, 32, 31/1, 32/1, 31/2, 32/2) formées de trous allongés qui s'étendent chacun approximativement sur toute la longueur d'une moitié de la barre de réglage (20, 20/1, 20/2) et sont séparés au milieu de la barre de réglage (20, 20/1, 20/2) par un isthme (33, 33/1, 33/2).

8. Appareil de compression de ressort selon l'une des revendications 1 à 7, caractérisé par le fait que la barre de réglage (20, 20/1) et les étriers de maintien (18, 19, 18/1, 19/1) sont formés chacun d'un plat en acier et le plan médian longitudinal de chacun est à peu près parallèle à l'axe longitudinal (40) du ressort hélicoïdal (2) à comprimer, et l'orientation générale de l'étrier de sécurité (17, 17/1) entre les douilles de guidage (10, 10/1, 10/2) correspond à peu près à la pente de la spire (14') du ressort engagée entre les éléments de compression.

9. Appareil de compression de ressort selon l'une des revendications 1 à 8, caractérisé par le fait que chaque étrier de maintien (18 ou 19) présente à son extrémité intérieure située vers la barre de réglage (20) une partie de jonction (34 ou 35) qui est relevée du même angle 1 ou 2 vers le ressort hélicoïdal (2), que la barre de réglage (20) est pliée au milieu dans la zone de son isthme (33) de façon telle qu'elle forme deux moitiés droites faisant entre elles un angle obtus situé vers le ressort hélicoïdal (2), et que les angles 1, 2 des étriers de maintien et l'angle de la barre de réglage sont accordés entre eux de façon que l'étrier de sécurité (17) entier s'étende à l'extérieur du ressort hélicoïdal (2) engagé quel que soit le diamètre de celui-ci.

10. Appareil de compression de ressort selon l'une des revendications 1 à 8, caractérisé par le fait que la barre de réglage (20/1) est courbe sur toute sa longueur et que chaque étrier de maintien (18/1 ou 19/1) présente à son extrémité intérieure située vers la barre de réglage (20/1) une partie de jonction (48 ou 48/1) dont la forme est adaptée à la courbure de la barre de réglage (20/1) et par laquelle l'étrier de maintien (18/1 ou 19/1) est joint à la barre de réglage (20/1), et chaque partie de jonction (48 ou 48/1) est courbée vers le ressort hélicoïdal (2) engagé de façon que l'étrier de sécurité (17/1) entier soit toujours à l'extérieur du ressort hélicoïdal (2) à comprimer quel que soit le diamètre de celui-ci.

11. Appareil de compression de ressort selon l'une des revendications 9 et 10, caractérisé par le fait que chaque étrier de maintien (18 ou 19, 18/1 ou 19/1) présente sur le bord frontal intérieur (45 ou 46, 45/1 ou 46/1) de sa partie de jonction (34 ou 35, 48 ou 48/1) un ergot de limitation relevé à peu près à angle droit (43 ou 44, 54 ou 54/1) qui entre avec jeu dans la fente de coulissement correspondante (31 ou 32, 31/1 ou 32/1) de la barre de réglage (20, 20/1).

12. Appareil de compression de ressort selon la revendication 11, caractérisé par le fait que l'ergot de limitation (43 ou 44, 54 ou 54/1) de chaque étrier de maintien (18 ou 19, 18/1 ou 19/1) limite le domaine de rotation de celui-ci par rapport à la barre de réglage (20, 20/1) à un angle total de rotation ou 2 d'environ 7° à 13°.

13. Appareil de compression de ressort selon l'une des revendications 1 à 12, caractérisé par le fait que chaque étrier de maintien (18/1 ou 19/1) est tenu sur la barre de réglage (20/1) par un raccord à vis (21 ou 22), et il est prévu sur chaque raccord à vis des rondelles (87, 88 ou 87/1, 88/1) qui sont adaptées aux contours extérieurs respectifs des étriers de maintien (18/1 et 19/1) et de la barre de réglage (20/1).

14. Appareil de compression de ressort selon l'une des revendications 1 à 13, caractérisé par le fait que les crochets de traction (6, 6/1) et les crochets de compression (9, 9/1, 9/2) des deux compresseurs de ressort (3, 4, 3/1, 4/1) présentent chacun une plaque réceptrice (55 ou 55/1, 61) destinée à recevoir une spire du ressort hélicoïdal (2) et dont l'orientation est adaptée à la pente des spires du ressort hélicoïdal (2) et qui présente un angle d'inclinaison 1 ou 2 d'environ 3° à 8°, de préférence d'environ 5°, par rapport à un plan (56', 56/1', 71) perpendiculaire à l'axe (56, 56/1) de la tige filetée ou par rapport à l'axe longitudinal de la douille de guidage (10, 10/1, 10/2).

15. Appareil de compression de ressort selon l'une des revendications 1 à 14, caractérisé par le fait que les crochets de traction (6, 6/1) et/ou les crochets de compression (9, 9/1) des deux compresseurs de ressort (3, 4, 3/1, 4/1) sont pourvus chacun d'une garniture en plastique destinée à recevoir le ressort hélicoïdal (2) qui est fixée de manière remplaçable au crochet de traction (6, 6/1) ou au crochet de compression (9, 9/1, 9/2) au moyen d'un encliquetage.

16. Appareil de compression de ressort selon l'une des revendications 1 à 4, 7 et 15, caractérisé par le fait que les étriers de maintien (18/2, 19/2) sont joints sans liberté de rotation relative et de manière démontable aux éléments de compression (7, 7/1, 7/2).

17. Appareil de compression de ressort selon la revendication 16, caractérisé par le fait que la barre de réglage (20/1) est droite, son plan médian longitudinal est parallèle à l'axe (40) du ressort hélicoïdal et sa direction longitudinale est à peu près parallèle à la spire (105) du ressort engagée entre les éléments de compression (7, 7/1, 7/2).

18. Appareil de compression de ressort selon l'une des revendications 16 et 17, caractérisé par le fait que les étriers de maintien (18/2, 19/2) sont fixés aux éléments de compression (7, 7/1, 7/2) de façon que les crochets de compression (9, 9/1, 9/2) de ceux-ci puissent, quel que soit le diamètre du ressort hélicoïdal (2) à comprimer, être accrochés à celui-ci toujours orientés radialement par rapport à celui-ci, et que cette orientation radiale donnée par l'étrier de sécurité (17/2) est conservée pendant la compression du ressort hélicoïdal (2).
